# FASCICULE DE BREVET EUROPEEN

(11) **EP 0 888 964 B1**
(45) Date de publication et mention de la délivrance du brevet: **31.05.2000**
(21) Numéro de dépôt: 98401604.8
(22) Date de dépôt: 26.06.1998
(51) Int. Cl.: B64C 27/50

(54) **Perfectionnements aux dispositifs pour le repliage d'une pale de rotor de giravion**
Verbesserungen an Rotorblattfaltanlage für Drehflügelflugzeuge
Improvements to rotorcraft blade folding devices

(30) Priorité: 30.06.1997 FR 9708198
(43) Date de publication de la demande: 07.01.1999
(73) Titulaire: EUROCOPTER, F-13725 Marignane Cédex (FR)
(72) Inventeur: Certain, Nicolas Pierre Georges, 13090 Aix en Provence (FR); Jalaguier, Jean-Pierre, 13127 Vitrolles (FR)
(74) Mandataire: Bérogin, Francis

(56) Documents cités:
- US-A- 4 712 978

## Description

L'invention concerne un dispositif pour le repliage manuel d'une pale d'un rotor de giravion, et en particulier d'un rotor principal d'hélicoptère, à au moins quatre pales, et de préférence à cinq pales ou plus.

Le dispositif de l'invention est plus particulièrement destiné au repliage manuel d'une pale d'un rotor du type sur lequel chaque pale est solidaire en rotation d'un moyeu du rotor par un organe de liaison, pouvant être un bras du moyeu ou un organe indépendant, rapporté sur le moyeu et souvent appelé manchon, qui est un organe sensiblement radial par rapport à un axe du moyeu, constituant l'axe de rotation du rotor, et dont l'extrémité radiale externe est conformée en chape dans laquelle la pale correspondante a son pied retenu par deux broches de pale traversant chacune des alésages alignés dans la chape de l'organe de liaison et le pied de pale, les deux broches de pale étant sensiblement parallèles entre elles, en étant généralement de plus sensiblement parallèles à l'axe de rotation du rotor lorsque le battement et le pas de la pale sont nuls, et perpendiculaires à un axe longitudinal de changement de pas de la pale correspondante, et disposées sensiblement symétriquement l'une de l'autre de part et d'autre dudit axe de pas, au moins une pale, mais de préférence plusieurs d'entre elles, étant repliable(s) sur un côté du giravion et ayant ses deux broches de pale amovibles de sorte que le retrait d'une broche du pied de pale et de la chape de l'organe de liaison correspondant permet le pivotement de la pale autour de l'autre broche de pale.

En général, les pales sont repliées vers l'arrière, de part et d'autre et le long de la poutre de queue de l'hélicoptère, sauf pour une pale, qui n'est pas repliée, lorsque le nombre des pales du rotor est impair, cette pale étant orientée vers l'arrière, au-dessus de la poutre de queue, avec son axe de pas sensiblement aligné sur l'axe longitudinal de l'hélicoptère. Les pales repliées forment ainsi deux groupes de pales situés chacun d'un côté respectivement de l'axe longitudinal de l'hélicoptère, et la broche de pale retirée pour le repliage est celle des deux broches qui est située la plus vers l'avant de l'hélicoptère, pour permettre le repliage vers l'arrière autour de la broche de pale située la plus en arrière. Selon le sens de rotation du rotor, la broche de repliage, la plus à l'arrière, est du côté du bord d'attaque de la pale correspondante, pour les pales d'un même côté de l'axe longitudinal de l'hélicoptère, tandis que la broche de repliage est du côté du bord de fuite pour les pales de l'autre côté de cet axe.

On sait que le repliage des pales de rotors à au moins cinq pales pose un problème délicat d'interférences des pales repliées, et en particulier des pales situées le plus à l'avant de chaque côté de l'axe longitudinal de l'hélicoptère, avec des pales situées plus en arrière, ou avec des composants associés à ces dernières pales, notamment leur organe de liaison et/ou des amortisseurs de traînée pouvant être articulés chacun entre un organe de liaison et le moyeu du rotor, ou chacun entre deux organes de liaison de deux pales voisines.

Afin d'éviter de telles interférences, qui empêchent un repliage complet de certaines pales et/ou sont la cause d'endommagement des pales et/ou d'organes associés sur le rotor, il a déjà été proposé d'éloigner les trajectoires de repliage des pales les unes des autres et/ou d'organes adjacents du rotor, tels que les organes de liaison et amortisseurs de traînée précités.

A cet effet, il est connu d'incliner judicieusement l'axe des broches de pale en faisant pivoter les organes de liaison autour de leur axe de pas, puis de pivoter chaque pale autour d'une broche de repliage d'axe incliné, après retrait de l'autre broche de pale. De manière connue, un tel calage en pas des organes de liaison du rotor à l'arrêt, pour replier les pales, peut être obtenu par un positionnement particulier du plateau cyclique et/ou par des changements de la longueur des biellettes de pas.

En pratique, la première solution est souvent insuffisante, surtout pour les rotors comportant plus de quatre pales.

La seconde solution offre davantage de possibilités, mais aboutit à un temps de repliage ainsi qu'à un temps de remise en configuration de vol qui sont très longs, et en outre cette solution multiplie les risques de mauvais remontage des biellettes de pas à la longueur appropriée, avant le vol de l'hélicoptère.

Pour modifier la trajectoire d'une pale repliée par une inclinaison de l'axe des broches de pale, il est également connu d'obtenir cette inclinaison en modifiant la géométrie et la structure de l'organe de liaison correspondante, en particulier au niveau de sa chape radiale externe, par rapport à la géométrie et à la structure classiques dans lesquelles les broches de pale sont perpendiculaires à l'axe de pas de la pale correspondante.

Cette solution est intéressante dans le cas d'organes de liaison constitués chacun d'une seule pièce, mais elle présente cependant l'inconvénient que chaque organe de liaison doit avoir une géométrie spécifique adaptée à la position azimutale occupée par cet organe autour de l'axe du rotor et à l'arrêt de ce dernier pour le repliage des pales. De plus, lorsque chaque organe de liaison n'est pas d'une seule pièce mais comprend deux flasques maintenus écartés par des entretoises, cette solution connue impose d'avoir deux flasques de géométrie et structure différentes ou d'utiliser une ferrure intermédiaire entre le pied de pale et les deux flasques de l'organes de liaison.

Pour remédier aux inconvénients précités des dispositifs de repliage présentés ci-dessus, et, d'une manière générale, proposer une solution au problème des interférences rencontrées lors du repliage des pales d'un rotor, notamment pour les rotors principaux d'hélicoptères au moins à quatre pales, il a déjà été proposé par US-A-4,712,978 un dispositif permettant le repliage des pales, sans modification de la géométrie ni de la structure des pièces principales de la tête de rotor c'est-à-dire, d'une part, du moyeu, et, d'autre part, des organes de liaison, des amortisseurs de traînée et d'autres moyens, tels que butées de battement et éventuellement mécanismes de blocage des pales en pas, en battement, voire même en traînée, avant leur repliage, qui peuvent ainsi être identiques d'une pale à l'autre.

Simultanément US-A-4,712,978 propose un dispositif pour le repliage de pale qui consiste en un outillage compatible avec les outillages connus de maintien et de reprise des efforts de battement et des moments en pas, qui doivent être mis en place quel que soit le type de rotor (tripale, quadripale, ...), ces outillages connus comprenant, par exemple, des butées hautes de battement et des ferrures outillages qui soulagent les biellettes de pas et les butées sphériques lamifiées qui, dans des rotors articulés, appartiennent aux moyens d'articulation reliant les organes de liaison au moyeu.

A cet effet, le dispositif selon US-A-4,712,978, pour le repliage d'une pale de rotor du type précité, c'est-à-dire dont les deux broches de pale retenant le pied de pale dans la chape externe de l'organe de liaison sont amovibles, est du type qui comprend au moins une entretoise amovible d'écartement du pied de la pale repliable par rapport à l'organe de liaison correspondant, l'entretoise comportant une première partie formant tourillon et traversée d'un premier alésage, et une seconde partie formant chape avec un second alésage, l'entretoise étant, après retrait d'une première broche de pale et pivotement de la pale par rapport à l'organe de liaison et autour de la seconde broche de pale, apte à être montée en rotation sur l'organe de liaison par la retenue du tourillon d'entretoise dans la chape de l'organe de liaison à l'aide d'une broche, engagée dans le premier alésage de l'entretoise et dans l'alésage, préalablement traversé par la première broche de pale, dans la chape de l'organe de liaison, et l'entretoise étant apte à retenir le pied de pale en rotation dans la chape d'entretoise par engagement d'une autre broche dans le second alésage de l'entretoise et dans l'alésage du pied de pale préalablement traversé par la première broche de pale, de sorte qu'après le retrait de la seconde broche de pale, la pale peut être repliée par pivotement de son pied dans la chape d'entretoise et pivotement de l'entretoise par son tourillon dans la chape de l'organe de liaison.

Afin d'écarter les unes des autres les trajectoires des pales repliables, l'entretoise du dispositif de repliage de US-A-4,712,978 est adaptée pour donner une inclinaison différente à au moins une pale repliable, afin d'en modifier la trajectoire. Ceci est obtenu par le fait que l'entretoise est un ensemble articulé, sur lequel le tourillon, constituant un interface moyeu, et la chape, constituant un interface pale, sont deux pièces distinctes articulées à pivotement l'une sur l'autre autour d'un axe perpendiculaire aux axes des deux alésages de l'entretoise, qui comprend également des moyens de réglage et de maintien du tourillon et de la chape d'entretoise dans une position relative particulière, correspondant à une inclinaison de l'axe du second alésage sur l'axe du premier, de sorte que la pale puisse pivoter par rapport à l'entretoise autour d'un axe incliné, alors que l'axe du premier alésage, pour le pivotement de l'entretoise sur la chape de l'organe de liaison, reste sensiblement parallèle à l'axe du rotor. Le pivotement de la pale dans la chape d'entretoise, autour d'un axe incliné, permet en particulier d'obtenir une trajectoire descendante d'une pale repliée vers l'arrière, de sorte que le faisceau des pales repliées est épanoui et non resserré. Dans US-A-4,712,978, les moyens de pivotement de la chape sur le tourillon d'entretoise comprennent un boulon de pivot traversant des orifices alignés dans les bases imbriquées l'une dans l'autre de la chape et du tourillon, tandis qu'un boulon de réglage et de blocage de l'inclinaison traverse des lumières oblongues dans des oreilles du tourillon et traverse également un alésage à l'extrémité supérieure de la chape, de sorte à permettre d'incliner la chape par rapport au tourillon par pivotement autour de l'axe de pivot jusqu'à une position d'inclinaison voulue pour une pale particulière, et à bloquer ensuite la chape et le tourillon dans cette position d'inclinaison, à laquelle il correspond une inclinaison de l'axe du second alésage (dans la chape) par rapport à l'axe du premier alésage (dans le tourillon) procurant la trajectoire voulue pour la pale considérée.

Ainsi, grâce à sa structure en deux parties pivotantes l'une sur l'autre, l'entretoise du brevet américain précité permet d'obtenir un repliage d'une pale avec une trajectoire descendante pour le logement de cette pale sous une autre pale repliée.

La pratique montre que le dispositif de repliage du brevet américain précité présente de nombreux inconvénients. Tout d'abord, l'entretoise comporte deux pièces amovibles et assemblées à pivotement qui sont non identiques pour toutes les pales. Il en résulte que chaque entretoise est d'une structure relativement complexe et d'un coût de réalisation relativement élevé. En outre, la mise en oeuvre de l'entretoise articulée de ce brevet américain est très délicate, voire impossible dans certaines conditions particulières d'exploitation d'un hélicoptère dont les pales doivent être repliées ou dépliées, par exemple sur un navire en mer et/ou par grand vent.

En effet, pour pouvoir monter l'entretoise par son tourillon dans la chape de l'organe de liaison et par sa chape sur le pied de pale, pour initier une séquence de repliage, et pour démonter l'entretoise de la chape de l'organe de liaison et du pied de pale, afin de terminer une séquence de dépliage d'une pale, ainsi que pour dégager complètement le pied de pale de la chape de l'organe de liaison au début d'un mouvement de repliage, et engager à nouveau le pied de pale dans la chape de l'organe de liaison en fin d'un mouvement de dépliage, il est nécessaire que l'axe du second alésage, traversant la chape d'entretoise, reste parallèle pendant ces opérations à l'axe du premier alésage, traversant le tourillon d'entretoise, pour que les faces planes supérieure et inférieure du pied de pale restent bien parallèles aux faces planes internes des branches de la chape de l'organe de liaison entre lesquelles le pied de pale est logé, déplacé ou reçu au cours des opérations précitées.

Par contre, dès que et aussi longtemps que le pied de pale est complètement dégagé de la chape de l'organe de liaison correspondant, le pied de pale peut pivoter dans la chape d'entretoise autour d'un axe incliné sur l'axe de pivot du tourillon d'entretoise dans la chape de l'organe de liaison.

Ceci signifie qu'il faut modifier l'inclinaison relative de la chape et du tourillon d'entretoise au cours d'une séquence de repliage comme au cours d'une séquence de dépliage d'une pale, ce qui impose le desserrage des moyens de blocage de l'inclinaison relative de ces deux pièces pour modifier leur inclinaison, puis le resserrage de ces moyens de blocage dans la nouvelle position d'inclinaison voulue, alors que le poids de la pale repose sur la ou les personnes effectuant le repliage manuel. En pratique, le desserrage des moyens de blocage entraîne un pivotement relativement brutal de la chape et de la pale par rapport au tourillon d'entretoise qui est difficilement contrôlable par les opérateurs supportant la pale, au repliage, tandis qu'au dépliage les opérateurs doivent soulever la pale en la faisant pivoter pour ramener l'axe du second alésage parallèle à celui du premier afin de pouvoir engager le pied de pale dans la chape de l'organe de liaison en fin de dépliage. En effet, sans action manuelle particulière sur la pale, le pied de pale est incliné par rapport à la chape de l'organe de liaison et son introduction dans cette dernière est impossible, et au cours de cette action les opérateurs ne bénéficient d'aucun moyen leur permettant de contrôler les rotations de la pale vers le haut pour ne pas endommager le pied de pale, la chape de l'organe de liaison ou d'autres pièces environnantes.

Le problème à la base de l'invention est de proposer un dispositif de repliage de pales perfectionné par rapport à celui du brevet US précité, et qui en procure tous les avantages sans en avoir les inconvénients précités.

Le but de l'invention est de proposer un dispositif de repliage du type présenté ci-dessus et connu par le brevet US précité, et qui convienne mieux que ce dernier aux diverses exigences de la pratique, et en particulier qui comporte une entretoise de structure effectivement très simple, très rigide bien que d'un encombrement limité, et donc bien moins complexe et bien moins coûteuse à réaliser que l'entretoise articulée du brevet américain précité. Simultanément, l'invention a pour but de proposer une telle entretoise qui soit d'une mise en oeuvre effectivement simple et pratique.

A cet effet, le dispositif de repliage manuel d'une pale selon l'invention, du type présenté ci-dessus, se caractérise en ce que le second alésage de l'entretoise a sa partie ménagée dans au moins une branche de la chape d'entretoise qui est un alésage oblong, permettant à ladite autre broche retenant le pied de pale dans la chape d'entretoise, de s'incliner par rapport à ladite broche, retenant le tourillon d'entretoise dans la chape de l'organe de liaison, de sorte à modifier la trajectoire de la pale dans son repliage par pivotement autour de ladite autre broche inclinée.

Ainsi, de manière simple et sans que l'entretoise comporte un tourillon et une chape d'entretoise qui sont articulés à pivotement l'un sur l'autre, la broche de retenue du pied de pale dans la chape d'entretoise peut, grâce à l'alésage oblong, avoir une position parallèle à la broche de retenue du tourillon d'entretoise dans la chape de l'organe de liaison, pour le montage et le démontage de l'entretoise comme pour le dégagement du pied de pale de la chape de l'organe de liaison, au début du repliage, et l'engagement du pied de pale dans cette chape, en fin de dépliage, et cette broche peut également s'incliner sur celle retenant le tourillon d'entretoise dans la chape de l'organe de liaison pour le repliage avec trajectoire descendante de la pale ou le dépliage avec trajectoire montante de cette pale autour de cette broche inclinée dès que et aussi longtemps que le pied de pale est complètement dégagé de la chape de l'organe de liaison.

De manière pratique, ladite autre broche, retenant le pied de pale dans la chape d'entretoise, est une broche outillage qui comporte une tige cylindrique apte à être reçue dans le second alésage de l'entretoise et engagée dans les au moins deux branches de la chape d'entretoise de sorte à retenir le pied de pale pivotant dans la chape d'entretoise, le tourillon d'entretoise et le premier alésage de l'entretoise ayant une géométrie adaptée à recevoir une broche de pale pour retenir l'entretoise pivotante dans la chape de l'organe de liaison.

On réalise que le dispositif de repliage de l'invention comprend un outillage simple, puisque constitué, pour chaque pale à replier à l'aide de ce dispositif, de deux pièces uniquement, qui sont une unique broche outillage, dont la géométrie peut être proche de celle d'une broche de pale, et une entretoise dont l'un des deux alésages, dans la partie formant chape, est partiellement délimité par un alésage oblong, définissant directement les deux positions limites que la broche outillage, reçue dans cet alésage oblong, doit pouvoir prendre vis-à-vis de la broche de pale retenant le tourillon d'entretoise sur la chape de l'organe de liaison, à savoir une position parallèle à cette broche de pale, pour le montage et le démontage de l'entretoise ainsi que pour la sortie et l'entrée du pied de pale respectivement hors de la chape de l'organe de liaison et dans cette chape, et une position inclinée définissant directement l'axe de repliage incliné.

Cet outillage en deux pièces rigides et de structure simple, peu encombrantes, donc faciles à transporter, et aisées à monter et démonter, permet, lors du repliage d'une pale, d'écarter le pied de pale de la chape de l'organe de liaison correspondant selon un déport latéral dont l'amplitude est égale à l'entraxe des deux alésages de l'entretoise, par rapport à un repliage sans le dispositif proposé. Ceci permet, au repliage d'une pale avant gauche ou avant droite d'un rotor à quatre ou cinq pales, d'écarter la pale repliée de l'organe de liaison et/ou de l'amortisseur de traînée de la pale arrière gauche ou arrière droite du rotor.

Dans une réalisation avantageuse, dans laquelle l'alésage oblong peut directement définir un angle judicieusement choisi pour assurer la non-interférence d'une pale repliée avec l'organe de liaison et un amortisseur de traînée d'une pale adjacente, l'alésage oblong est ménagé dans la branche supérieure de la chape d'entretoise, tandis que la branche inférieure de la chape d'entretoise présente un évidement en portée sphérique, et la broche outillage comporte une tige se terminant par un embout sphérique qui, lors de la mise en place de la broche outillage dans la chape d'entretoise, est arrêté en translation par la portée sphérique. Avantageusement de plus, l'embout sphérique de la broche outillage est retenu dans la portée sphérique de la branche inférieure de la chape d'entretoise par un organe de retenue cylindrique, tel qu'une goupille ou broche à bille, logé dans un alésage diamétral traversant l'embout sphérique et un alésage traversant ladite branche inférieure de chape d'entretoise, de sorte que la broche outillage peut pivoter par rapport à l'entretoise autour de l'axe dudit organe de retenue cylindrique.

En outre, afin que la position de la pale repliée soit bien définie, l'entretoise comporte avantageusement au moins une première butée de rotation, limitant la rotation de l'entretoise par rapport à l'organe de liaison, et au moins une deuxième butée de rotation, limitant la rotation de la pale par rapport à l'entretoise, au repliage de ladite pale.

De plus, pour éviter qu'une pale au dépliage ne vienne se placer, par rotation de cette pale par rapport à l'entretoise et rotation de cette dernière par rapport à la chape de l'organe de liaison, dans une position telle que le pied de pale présente une section inclinée par rapport aux branches de la chape de l'organe de liaison, c'est-à-dire dans une position ne permettant pas l'engagement du pied de pale dans cette chape, il est avantageux que le dispositif comprenne également au moins un organe d'attache amovible, destiné à être monté entre l'entretoise et un point fixe solidaire de l'organe de liaison, de sorte à empêcher la rotation de l'entretoise par rapport à l'organe de liaison à partir de la position de repliage de la pale et vers la position de dépliage de cette dernière.

A cet effet, il est avantageux que l'organe d'attache, monté entre l'entretoise et ledit point fixe, maintienne l'entretoise en appui par ladite première butée de rotation contre ladite chape de l'organe de liaison, au moins au cours du dépliage de la pale, avant et pendant la rotation de la pale par rapport à l'entretoise.

Compte tenu que, grâce à l'alésage oblong dans la chape de l'entretoise du dispositif de l'invention, la broche outillage peut prendre deux positions caractéristiques par rapport à la broche de pale retenant le tourillon d'entretoise dans la chape de l'organe de liaison, à savoir une position de parallélisme et une position d'inclinaison, mais que la position d'inclinaison ne doit pouvoir être adoptée que lorsque le pied de pale est totalement dégagé de la chape de l'organe de liaison, le dispositif de l'invention comprend également et avantageusement au moins un organe mobile sur l'entretoise entre une première position, dans laquelle l'organe mobile recouvre au moins partiellement l'alésage oblong de sorte à maintenir ladite autre broche, ou broche outillage, parallèle à ladite broche retenant le tourillon dans la chape de l'organe de liaison, et une seconde position dans laquelle ledit organe mobile est dégagé dudit alésage oblong de sorte à permettre l'inclinaison de ladite autre broche, ou broche outillage, par rapport à ladite broche, ou broche de pale, retenant le tourillon dans la chape de l'organe de liaison.

Par sécurité, ledit organe mobile est avantageusement déplacé de sa première vers sa seconde position à l'encontre de moyens élastiques de rappel sur l'entretoise vers sa première position, pour permettre l'inclinaison de ladite autre broche.

Selon une réalisation avantageusement simple, ledit organe mobile est un doigt monté pivotant sur l'entretoise autour d'un axe sensiblement parallèle audit premier alésage et entre deux butées solidaires de l'entretoise et arrêtant chacune ledit doigt dans l'une respectivement desdites première et seconde positions, le doigt étant conformé de sorte qu'en appui contre la butée de la première position, ladite autre broche, ou broche outillage, peut être engagée dans le second alésage de l'entretoise parallèlement audit premier alésage, pour le montage du pied de pale dans la chape de l'entretoise. Cette configuration, dans laquelle le doigt dans sa première position n'empêche pas l'accès à l'alésage oblong pour y placer ladite autre broche, ou broche outillage, parallèlement à la broche de pale retenant l'entretoise sur la chape de l'organe de liaison, est non seulement favorable au montage du pied de pale dans la chape de l'entretoise, mais également au démontage de ces deux éléments ainsi qu'aux rotations de la pale dans la chape d'entretoise aussi longtemps ou dès qu'une partie du pied de pale est engagée dans la chape de l'organe de liaison.

Pour ces raisons, il est avantageux que ledit organe d'attache soit monté sur l'entretoise en étant lié audit doigt pivotant de sorte à faire pivoter ledit doigt de sa première à sa seconde position sur l'entretoise lorsque l'organe d'attache est lié audit point fixe solidaire de l'organe de liaison. On obtient ainsi automatiquement que ladite autre broche ou broche outillage, ne peut être inclinée dans l'alésage oblong que lorsque l'entretoise est maintenue en appui par sa ou ses premières butées de rotation contre la chape de l'organe de liaison, au moins au cours du dépliage de la pale, avant et pendant la rotation de la pale par rapport à l'entretoise, et de préférence également au cours du repliage de la pale, après la rotation de l'entretoise par rapport à l'organe de liaison.

En outre, pour faciliter encore le positionnement relatif, au dépliage, de l'entretoise et du pied de pale ainsi que la rotation de l'entretoise par rapport à l'organe de liaison et l'engagement du pied de pale dans la chape de l'organe de liaison, l'entretoise présente avantageusement au moins une butée d'entraînement en rotation de l'entretoise par l'appui d'au moins une butée du talon du pied de pale pendant le dépliage de la pale, après la rotation de la pale par rapport à l'entretoise.

Pour un meilleur support de la pale, la chape d'entretoise a une branche inférieure qui porte sur sa face interne une butée d'appui vertical de la pale, et cette butée d'appui est avantageusement annulaire, de préférence en matière plastique, et apte à être traversée par la broche de retenue du pied de pale dans la chape d'entretoise, que cette broche de retenue soit la broche outillage présentée ci-dessus ou une broche de pale.

Dans le cas où cette broche de retenue est la broche outillage coopérant avec un alésage oblong de la chape d'entretoise, la butée d'appui située sur la face interne de la branche inférieure de la chape d'entretoise comporte de préférence un pan incliné servant d'appui vertical à la pale en position repliée.

Pour faciliter le montage d'une entretoise rigide et de faible encombrement dans la chape de l'organe de liaison et sa liaison au pied de pale, il est avantageux que l'entretoise soit monobloc et coudée, sensiblement en équerre, ou cintrée sensiblement en croissant, dans un plan sensiblement perpendiculaire à l'axe du premier alésage de l'entretoise.

En outre, ladite broche amovible, retenant le tourillon d'entretoise dans la chape de l'organe de liaison, peut être ladite première broche de pale ou une broche de pale retirée d'une autre pale du rotor qui se replie par pivotement autour de sa seconde broche de pale sans mise en place d'une entretoise amovible d'écartement.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue schématique en plan d'un rotor à cinq pales, dont quatre sont repliées vers l'arrière, les deux pales avant étant repliées à l'aide d'un dispositif selon l'invention,
- la figure 2 est une vue partielle en coupe longitudinale selon II-II de la figure 1, et représente la liaison d'une pale au moyeu en configuration de vol, au niveau de la pale arrière non repliée du rotor de la figure 1,
- la figure 3 est une vue partielle schématique en plan du pied de la pale avant droite du rotor de la figure 1 en position repliée à l'aide d'un dispositif de l'invention ,
- la figure 4 est une coupe selon la ligne brisée IV-IV de la figure 3,
- les figures 5, 6 et 7 sont trois vues schématiques en plan représentant une séquence de repliage à l'aide d'un dispositif de l'invention,
- la figure 8 est une vue en perspective d'un exemple d'entretoise du dispositif permettant l'inclinaison d'une pale repliable,
- la figure 9 est une vue partielle en plan analogue à la figure 3 pour l'exemple d'entretoise de la figure 8,
- les figures 10 et 11 sont des vues en coupe respectivement selon X-X et XI-XI de la figure 9,
- la figure 12 est une vue partielle en perspective schématique du dispositif des figures 8 à 11 en position repliée d'une pale,
- la figure 13 est une vue partielle en perspective schématique montrant des positions relatives du pied de pale et de la chape de l'organe de liaison,
- la figure 14 est une vue analogue à la figure 12 en cours du dépliage d'une pale, et
- la figure 15 est une vue partielle schématique en plan du dispositif avec son entretoise repliée contre l'organe de liaison et un mécanisme à doigt pivotant et organe d'attache de l'entretoise contre l'organe de liaison.

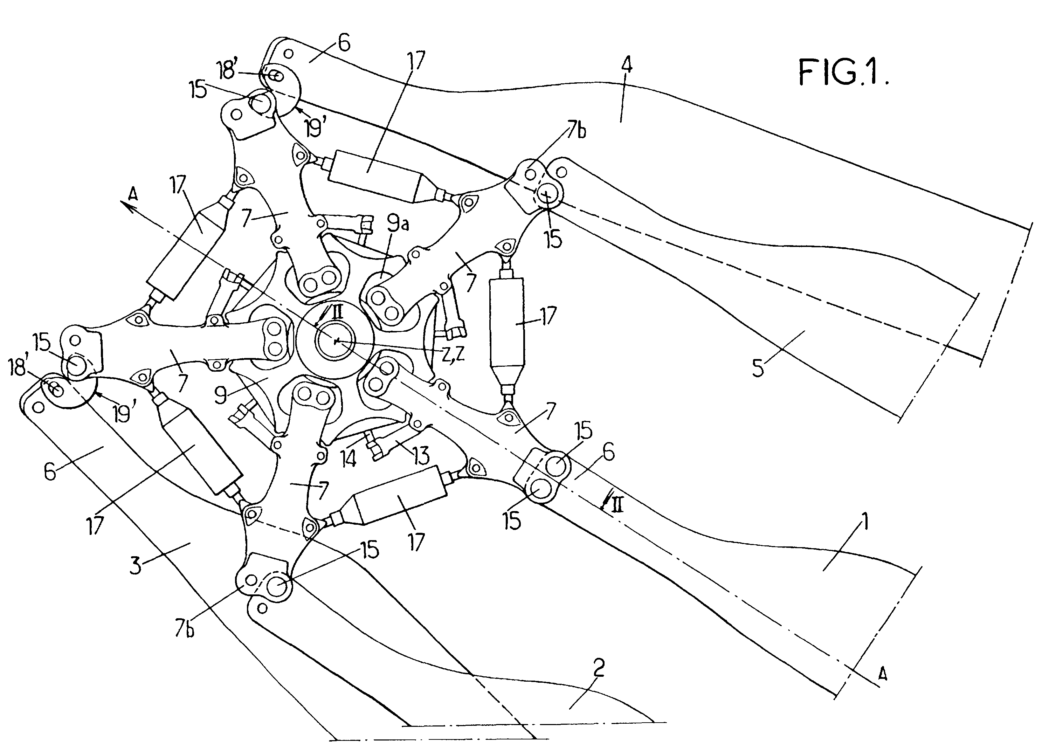

La figure 1 représente un rotor principal d'hélicoptère à cinq pales, du type décrit dans EP-A-340 095, auquel on se reportera pour davantage de précisions.

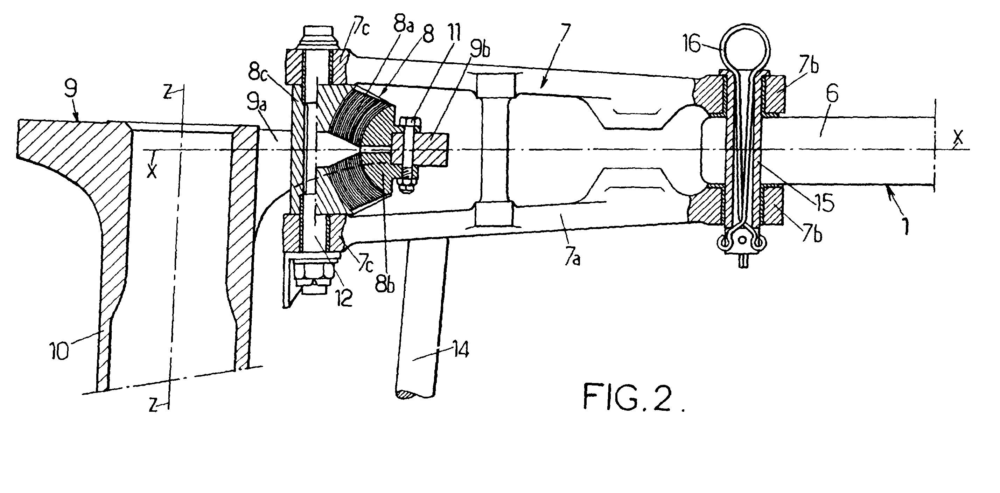

On rappelle qu'en configuration de vol, chacune des cinq pales 1, 2, 3, 4, 5 identiques du rotor est reliée au moyeu de la manière représentée sur la figure 2 et sur la figure 1 pour la seule pale 1. Cette dernière est la pale arrière, s'étendant au-dessus de la poutre de queue de l'hélicoptère et dont l'axe longitudinal de changement de pas est sensiblement aligné avec l'axe longitudinal de l'hélicoptère A-A (portant une flèche indiquant l'avant de l'hélicoptère), lorsque le rotor est arrêté pour le repliage des quatre autres pales 2 à 5 vers l'arrière de l'hélicoptère et le long de la poutre de queue de ce dernier, la pale arrière gauche 2 et la pale avant gauche 3 étant repliées sur le côté gauche tandis que la pale avant droite 4 et la pale arrière droite 5 sont repliées sur le côté droit.

En configuration de vol, chacune des pales 1 à 5 est retenue par son pied 6 sur un organe de liaison 7, appelé manchon dans la suite de la description, ce manchon 7 étant lui-même relié par des moyens d'articulation 8 au moyeu 9 solidaire en rotation d'un mât rotor 10 autour de son axe Z-Z, qui est l'axe de rotation du rotor.

Sur le rotor des figures 1 et 2, le moyeu 9 est du type à plateau alvéolé, présentant, pour chacune des cinq pales 1 à 5, un alvéole axial 9a logeant les moyens d'articulation 8, qui comprennent une butée lamifiée sphérique, d'un type bien connu, pour encaisser en compression les forces centrifuges pendant la rotation du rotor, et permettant les débattements angulaires de chaque pale et de son manchon 7 en pas, autour de l'axe longitudinal de changement de pas (X-X sur la figure 2) de la pale considérée, en battement, autour d'un axe de battement perpendiculaire aux axes Z-Z et X-X, et en traînée, autour d'un axe de traînée perpendiculaire à l'axe X-X et sensiblement parallèle à l'axe Z-Z, les axes de battement, de traînée et de pas X-X étant concourants au centre géométrique de la butée sphérique 8. Cette dernière comprend une partie centrale 8a constituée d'un empilement alterné de coupelles rigides et de couches d'un matériau élastomère, en forme de calottes sphériques à concavité tournée vers une armature radiale externe 8b, par laquelle la butée 8 est fixée, par des boulons 11, sur le bord radial externe 9b du plateau 9, au niveau de l'alvéole 9a correspondant. La butée sphérique 8 comprend également une armature radiale interne 8c qui traverse l'alvéole 9a et est fixée en entretoise, par deux ensembles à goujons axiaux filetés et écrous 12, entre les deux branches d'une chape 7c aménagée à l'extrémité radiale interne du manchon 7, dont la partie centrale est repérée en 7a.

Chaque manchon 7 porte, en saillie du côté du bord d'attaque de la pale correspondante, un levier de pas 13 articulé sur une biellette de pas 14 reliée de manière connue à un ensemble de plateaux cycliques (non représenté) pour la commande du pas de chaque pale autour de son axe de pas X-X.

De manière connue, la partie d'extrémité radiale externe de chaque manchon 7 est aménagée en chape 7b, entre les deux branches de laquelle le pied 6 de la pale correspondante est retenu par deux broches de pale 15 traversant chacune des alésages alignés dans le pied de pale 6 et dans les deux branches de la chape 7b. Les deux broches 15 ont leurs axes parallèles l'un à l'autre et perpendiculaires à l'axe de pale X-X, et les broches 15 sont disposées symétriquement l'une de l'autre de part et d'autre de cet axe X-X. Chaque broche de pale 15 comporte une tige cylindrique tubulaire traversant les branches de la chape 7b et le pied de pale 6 et elle-même traversée par une épingle élastique 16 de retenue de la broche 15 en position d'appui de sa tête, à l'extrémité supérieure de la tige cylindrique, contre la branche supérieure de la chape 7b.

Les deux broches de pale 15 sont amovibles, après retrait des épingles de sécurité 16, pour la dépose de la pale, et il est connu d'effectuer un repliage manuel d'une telle pale en retirant l'une des deux broches de pale 15 et en faisant pivoter la pale par son pied 6 autour de l'autre broche 15 retenue en position.

Ce mode conventionnel de repliage manuel d'une pale est utilisé, sur le rotor de la figure 1, pour les pales arrière gauche 2 et droite 5 de part et d'autre de la pale arrière 1. Le repliage de ces pales 2 et 5 est effectué avant le repliage des pales avant 3 et 4, et il est assuré, pour la pale arrière gauche 2, en retirant la broche de pale 15 la plus à l'avant, c'est-à-dire, compte tenu du sens de rotation du rotor, qui est le sens horaire sur la figure 1, celle la plus proche du bord d'attaque de la pale 2, qui est ensuite pivotée vers l'arrière autour de la broche de pale 15 la plus en arrière, c'est-à-dire la plus proche du bord de fuite de cette pale 2. De même, pour la pale arrière droite 5, la broche de pale 15 qui est retirée est celle située vers l'avant, c'est-à-dire la plus proche de bord de fuite de la pale 5, laquelle est ensuite pivotée vers l'arrière autour de la broche de pale 15 la plus en arrière, c'est-à-dire du côté de son bord d'attaque.

Le repliage des pales avant gauche 3 et droite 4 ne peut pas être effectué de la même manière, au risque d'aboutir à une interférence du bord d'attaque de la pale avant droite 4 avec le manchon 7 de la pale arrière droite 5, en particulier au niveau de sa chape externe 7b, et une interférence du bord de fuite de la pale avant gauche 3 avec le manchon 7 de la pale arrière gauche 2 et/ou l'un ou l'autre des deux amortisseurs de traînée 17, qui sont montés en amortisseurs interpale, comme plus particulièrement décrit dans EP-A-340 095, et sont articulés latéralement sur les côtés opposés du manchon 7 de la pale arrière gauche 2.

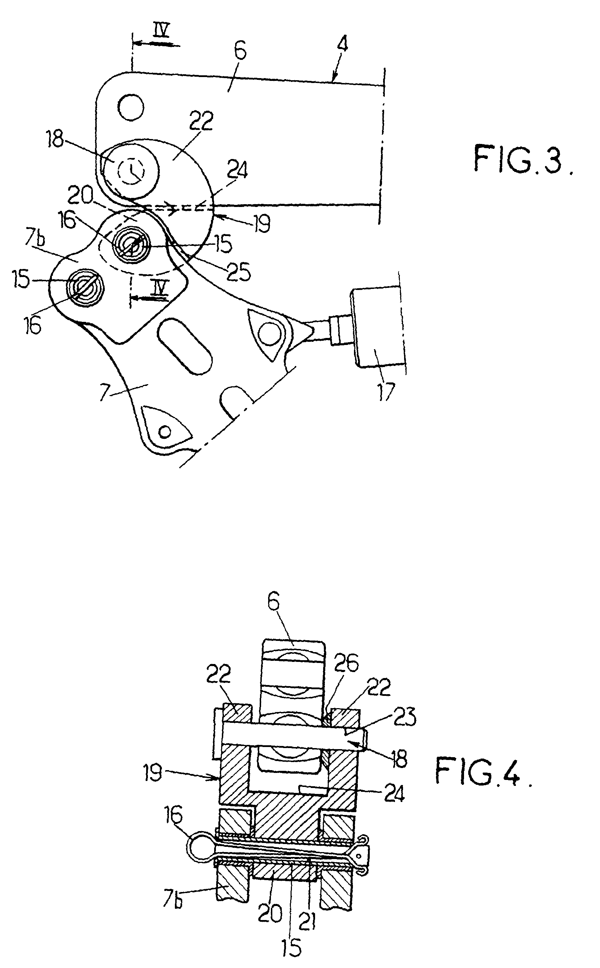

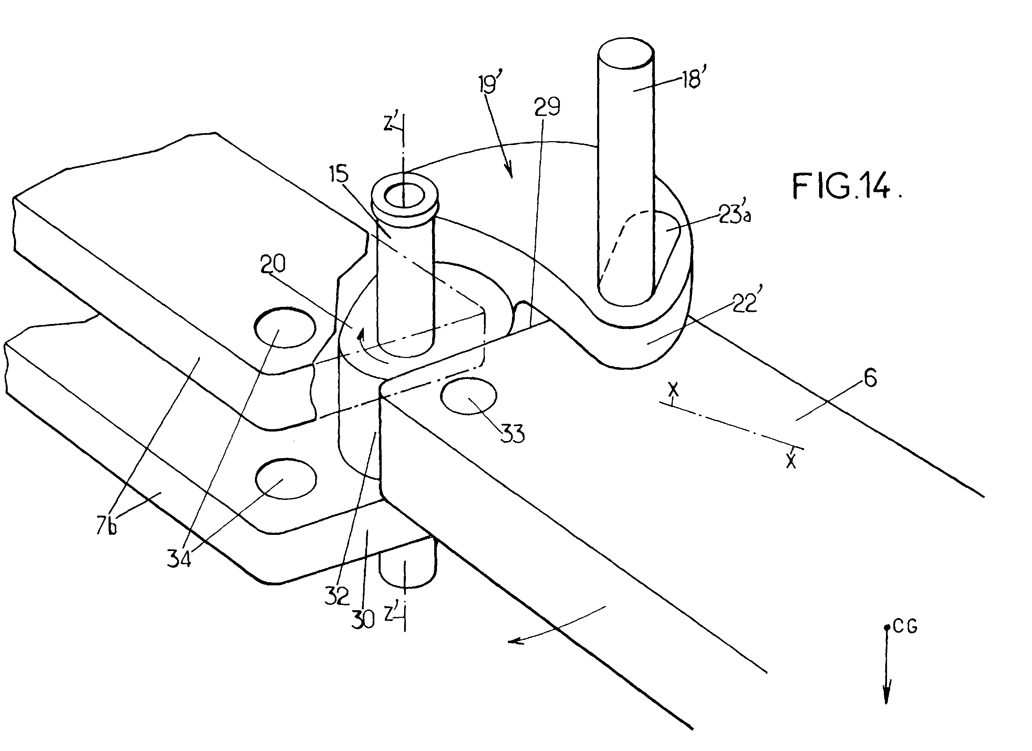

Pour éviter ces interférences, le repliage vers l'arrière de chacune des pales avant gauche 3 et droite 4 est assuré à l'aide d'un dispositif propre à l'invention, décrit à présent schématiquement en référence aux figures 3 à 7, et plus précisément ci-après en référence aux figures 8 à 15, et tel qu'utilisé, à titre d'exemple, pour la pale avant droite 4. Ce dispositif consiste en un outillage simple, facile à réaliser, monter, démonter et transporter, et qui est essentiellement constitué de deux pièces, à savoir une broche outillage 18 ou 18', dont la géométrie est relativement proche de celle d'une broche de pale 15, afin de pouvoir lui être substituée dans une fonction de brochage, l'autre pièce essentielle étant une entretoise outillage monobloc cintrée 19 (figures 3 à 7) ou 19' (figures 8 à 15) remplissant la fonction d'une entretoise amovible d'écartement du pied 6 de la pale repliable 4 par rapport au manchon 7 correspondant.

Comme représenté sur les figures 3 et 4, l'entretoise monobloc 19 présente, en plan, une forme cintrée en croissant et comprend deux parties d'extrémité dont l'une est agencée en tourillon 20 traversé d'un premier alésage 21, et dont l'autre est agencée en chape 22 dont les deux branches sont traversées d'un second alésage 23. Pour faciliter la description et la compréhension de la mise en oeuvre du dispositif, on admet dans un premier temps que les axes des deux alésages 21 et 23 sont parallèles, et l'entretoise 19 est cintrée dans un plan sensiblement perpendiculaire à l'axe de son premier alésage 21. La hauteur du tourillon 20 correspond à celle d'un pied de pale 6 tandis que l'écartement entre les deux branches de la chape 22 de l'entretoise 19 est légèrement supérieur à la hauteur d'un pied de pale 6, et le diamètre des premier et second alésages 21 et 23 de l'entretoise 19 correspond au diamètre des deux alésages du pied de pale 6 et des deux alésages dans chacune des deux branches de la chape externe 7b qui reçoivent les deux broches de pale 15. Ainsi, le tourillon 20 de l'entretoise outillage 19 peut être substitué à une moitié latérale de l'extrémité du pied de pale 6 entre les parties des deux branches de la chape externe 7b d'un manchon 7 qui sont traversées par une seule broche de pale 15, et l'entretoise 19 peut être montée pivotante par son tourillon 20 dans une moitié de la chape 7b dans laquelle le tourillon 20 est retenu par une broche de pale 15, ou, éventuellement, par une broche outillage substituable à une broche de pale 15. De manière similaire, le pied de pale 6 peut être retenu dans la chape d'entretoise 22 par la broche outillage 18, ou éventuellement par une broche de pale 15, autour de laquelle le pied de pale 6 peut pivoter, comme représenté sur la figure 4.

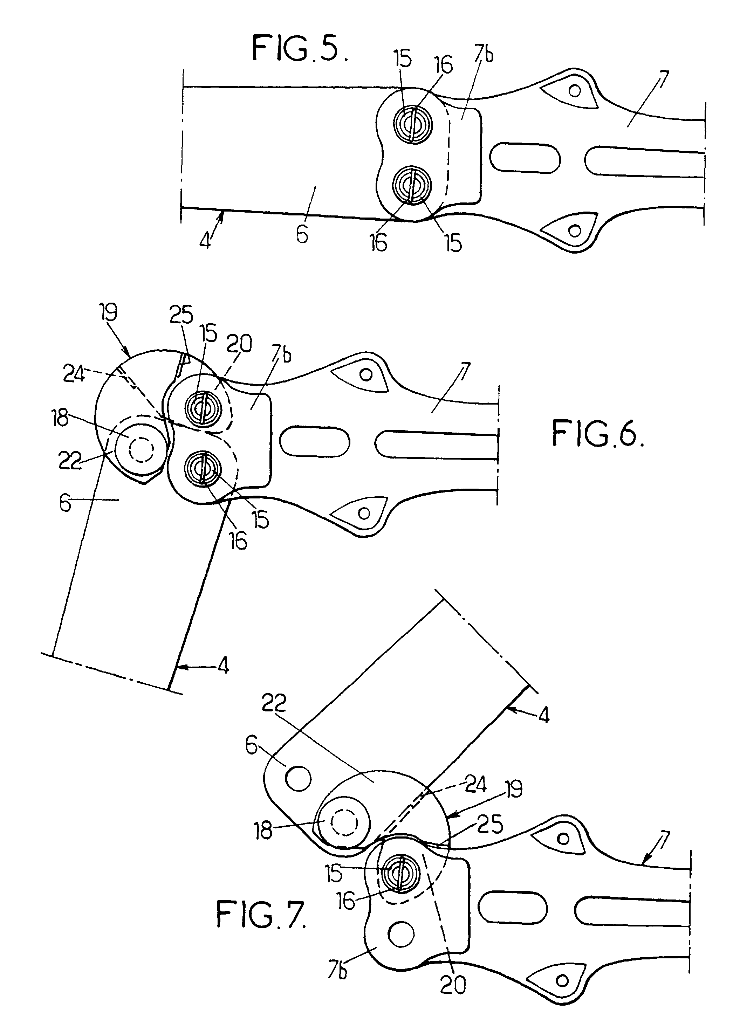

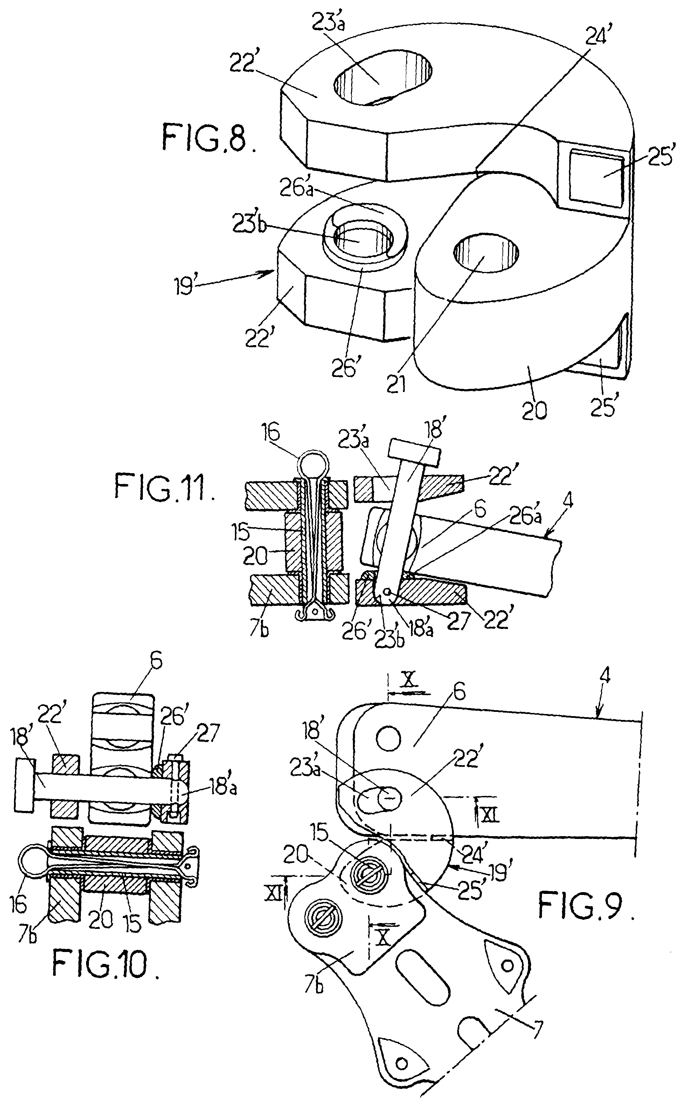

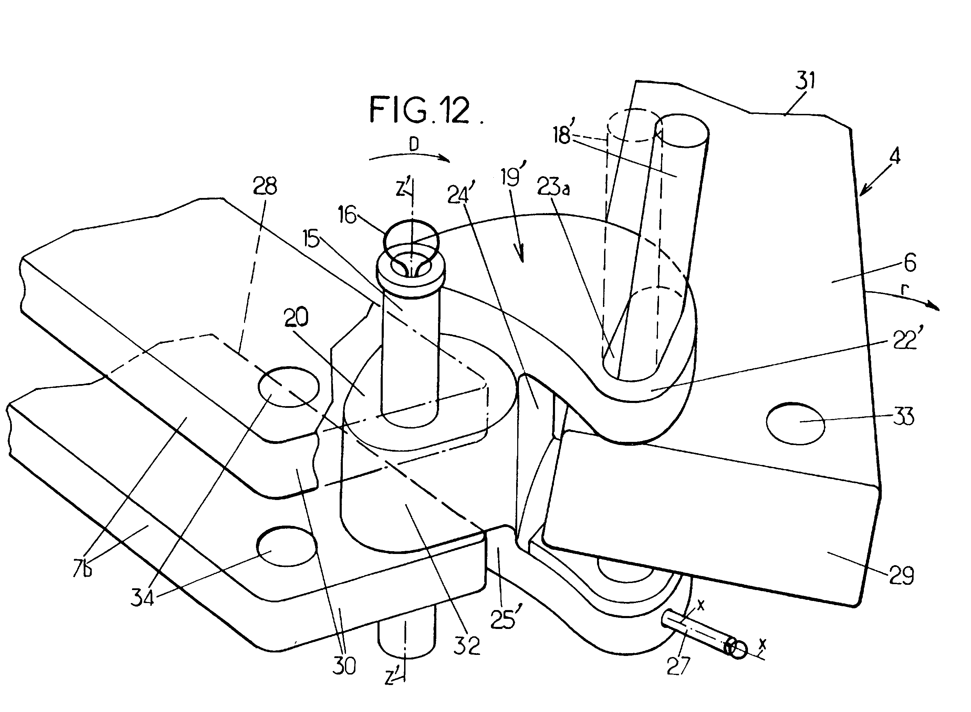

Le mode opératoire de repliage de la pale 4 à l'aide du dispositif de l'invention est décrit ci-dessous dans ses étapes principales en référence aux figures 5 à 7, qui représentent la séquence de repliage d'une pale du côté de son bord d'attaque.

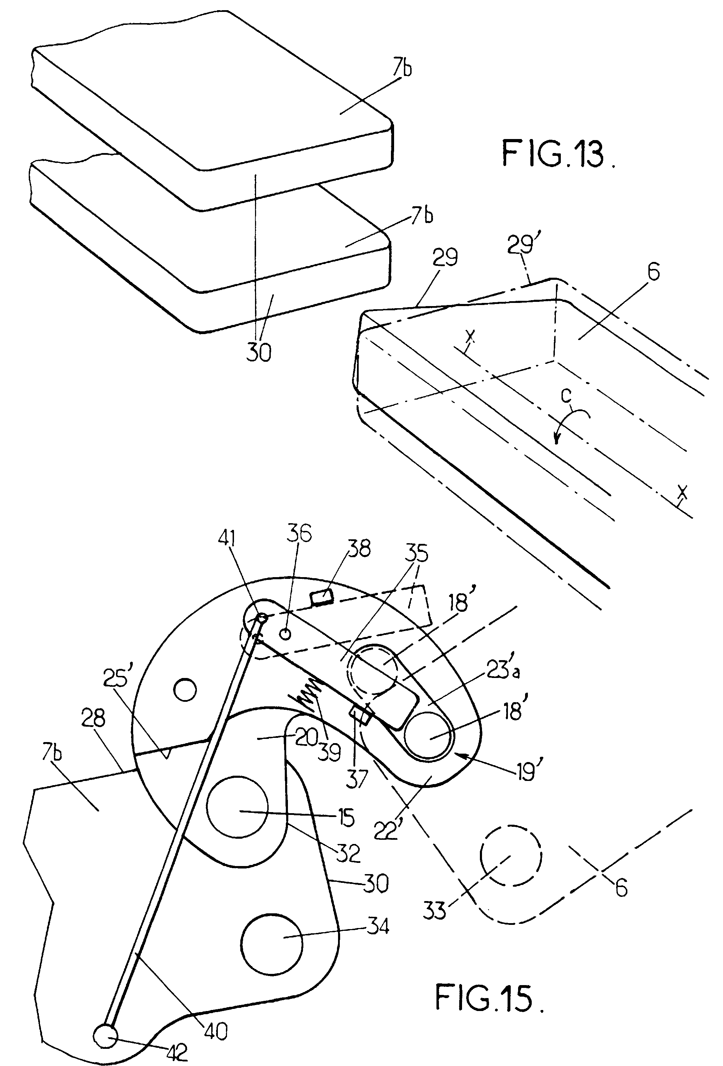

La pale 4 étant initialement en configuration de vol (figure 5), on commence par retirer une première broche de pale 15, qui est celle des deux broches 15 (retenant le pied de pale 6 dans la chape 7b) qui se trouve du côté vers lequel on veut replier la pale 4, c'est-à-dire la broche de pale 15 du côté du bord d'attaque de cette pale 4, ou encore la broche de pale 15 la plus en arrière, du côté vers lequel on veut pivoter la pale 4. La seconde opération consiste à faire pivoter la pale 4 du côté de son bord de fuite, c'est-à-dire vers l'avant sur la figure 1, autour de la seconde broche de pale 15, la plus en avant, pour amener la pale 4 sensiblement dans la position de la figure 6. On positionne ensuite le tourillon 20 de l'entretoise outillage 19 dans la partie de chape 7b libérée par la rotation de la pale 4, et on dispose les deux branches de la chape d'entretoise 22 de part et d'autre de la partie du pied de pale 6 qui n'est plus engagée dans la chape 7b. L'entretoise outillage 19 est ainsi disposée entre une partie de la chape 7b du manchon 7 et une partie du pied de pale 6. On retient ensuite le tourillon 20 de l'entretoise 19 à pivotement dans la chape 7b avec la première broche de pale 15 engagée dans le premier alésage 21 de l'entretoise 19 et dans les alésages des branches de la chape 7b que cette broche 15 traversait avant son démontage. Par pivotement de l'entretoise 19 et du pied de pale 6 autour de l'une respectivement des deux broches de pale 15 on dispose correctement l'entretoise 19 et le pied de pale 6 pour introduire la broche outillage 18 dans l'alésage 23 de la chape d'entretoise 22 et dans l'alésage du pied de pale 6 initialement traversé par la première broche de pale 15, qui a été retirée puis remontée pour retenir le tourillon 20 dans la chape 7b. La position occupée est alors celle de la figure 6. On retire ensuite la seconde broche de pale 15, du côté du bord de fuite de la pale 4 ou encore du côté opposé au côté vers lequel on veut replier la pale 4, puis on fait pivoter, d'une part, la pale 4 par son pied 6 dans la chape 22 de l'entretoise 19 jusqu'à la venue du pied de pale 6 en contact avec une butée 24 aménagée sur le fond de la chape d'entretoise 22, pour limiter la rotation relative de la pale 4 et de l'entretoise 19, et, d'autre part, l'entretoise 19 par son tourillon 20 dans la chape 7b jusqu'à la venue en contact d'une butée 25 aménagée sur la face externe d'au moins une branche de chape 22, contre un côté de la chape 7b, pour limiter la rotation de l'entretoise 19 par rapport au manchon 7. On amène ainsi par ce double pivotement la pale 4 dans la position repliée de la figure 7.

Dans sa position repliée de la figure 7, qui correspond sensiblement à celle de la figure 3, la pale 4 est ainsi déportée de la valeur de l'entraxe de l'entretoise 19 (c'est-à-dire de la distance séparant les axes de ses deux alésages 21 et 23) vers l'extérieur, par rapport à un repliage conventionnel, tel que celui des pales arrière 2 et 5, sans le dispositif proposé, ce qui permet d'écarter la pale 4 du moyeu 9 et du manchon 7 de la pale 5 et de l'amortisseur de traînée 17 adjacent.

Pour déplier la pale, c'est-à-dire ramener la pale 4 de sa position repliée vers l'arrière à sa configuration de vol, on reprend dans l'ordre inverse les opérations de la séquence décrite ci-dessus.

Le repliage vers l'arrière de la pale avant gauche 3 s'effectue à l'aide d'un dispositif analogue, dont la seule différence avec celui décrit ci-dessus est que l'entretoise outillage est symétrique de celle 19 des figures 3 à 7.

Le détrompage entre les deux entretoises outillage est assuré avec des marques de couleurs différentes d'une entretoise à l'autre et identiques aux couleurs de marques figurant sur les pales sur lesquelles les entretoises outillage sont destinées à être montées.

Pour améliorer le support et la rotation d'un pied de pale 6 dans la chape d'entretoise 22, une butée 26 d'appui vertical de la pale est montée sur la face interne de la branche inférieure de cette chape 22. Cette butée 26 est annulaire, montée autour de la partie du second alésage 23 qui traverse cette branche inférieure de la chape 22 de sorte que cette butée 26 est traversée par la broche outillage 18 retenant le pied de pale 6 dans la chape d'entretoise 22, et la butée 26 est réalisée en une matière plastique.

Dans l'exemple simplifié des figures 3 et 4, la broche outillage 18 comporte une tige cylindrique extérieurement identique à la partie cylindrique tubulaire d'une broche de pale 15, et une tête élargie d'appui contre la branche supérieure de la chape d'entretoise 22. La broche outillage 18 et une broche de pale 15 sont ainsi substituables. Pour cette raison, il est possible d'utiliser, comme broches outillage pour les pales avant 3 et 4, les broches de pale 15 retirées lors du repliage, effectué de manière classique, des pales arrière 2 et 5.

Le dispositif de repliage des figures 3 et 4 n'est utilisé pour le repliage des pales avant 3 et 4 qu'après le repliage des pales arrière 2 et 5, lui-même n'intervenant qu'après l'utilisation d'autres outillages, non décrits ci-dessous car bien connus et ne faisant pas partie de l'invention, pour le maintien des pales et la reprise des efforts de battement et des moments en pas, et qui doivent être mis en place quel que soit le nombre de pales du rotor, pour soulager la butée lamifiée sphérique 8 et la biellette de pas 14 de chaque pale.

Le dispositif de l'invention est représenté de manière détaillée avec une variante d'entretoise sur les figures 8 à 11. La figure 8 représente cette variante d'entretoise outillage 19' monobloc ou d'une seule pièce, sur laquelle on retrouve le tourillon 20 traversé du premier alésage 21, pour recevoir une broche de pale 15 de liaison pivotante dans la chape 7b du manchon 7 correspondant, ainsi qu'une chape 22' pour la liaison pivotante de l'entretoise 19' au pied de pale 6, l'entetoise 19' étant également coudée en équerre ou cintrée en croissant dans un plan sensiblement perpendiculaire à l'axe de son premier alésage 21. Sur une face du tourillon 20 tournée vers l'intérieur de la chape 22', dont cette face constitue le fond, l'entretoise 19' présente la butée 24' limitant la rotation du pied de pale 6 par rapport à l'entretoise 19', et chacune des branches de la chape 22' présente, latéralement dans sa partie solidaire du tourillon 20, l'une des deux butées 25' limitant la rotation de l'entretoise 19' par rapport au manchon 7. La principale différence par rapport à l'exemple simplifié des figures 3 et 4 est que la partie 23'a du second alésage qui traverse la branche supérieure de la chape 22' est un alésage oblong, visible sur les figures 8, 9 et 11, allongé sensiblement selon une direction inclinée sur la longueur de cette branche supérieure de chape 22, tandis que la partie du second alésage qui est ménagée dans la branche inférieure de la chape 22' est conformée en portée sphérique 23'b, visible sur les figures 10 et 11. La broche outillage 18' a sa tige cylindrique qui se termine par un embout sphérique 18'a, qui, lors de la mise en place de la broche 18' dans la chape 22', arrête la broche 18' par appui dans la portée sphérique 23'b. Une goupille de sécurité ou broche à bille 27, de structure connue, est logée par un opérateur dans un alésage diamétral, traversant l'embout sphérique 18'a, et dans un alésage qui traverse la branche inférieure de la chape 22' transversalement, c'est-à-dire sensiblement perpendiculaire au grand axe de l'alésage oblong 23'a, comme représenté sur les figures 10 et 11, pour retenir l'embout sphérique 18'a de la broche outillage 18' dans la portée sphérique 23'b. De la sorte, la broche outillage 18' peut pivoter autour de l'axe x-x de la goupille de sécurité ou broche à bille 27 par rapport à l'entretoise 19'. L'angle maximum de rotation de la broche 18' est défini par l'alésage oblong 23'a, et cet angle est choisi pour que la trajectoire de la pale 4 qui pivote autour de la broche outillage 18' inclinée n'interfère pas avec d'autres éléments de la tête de rotor, notamment le manchon 7 et un amortisseur de traînée 17 d'une pale adjacente. Ainsi, les caractéristiques géométriques du second alésage de l'entretoise 19', dans sa partie en chape 22', ainsi que de la broche outillage 18' permettent de modifier l'angle entre les axes de la broche de pale 15 et de la broche outillage 18' reçues dans les deux alésages de l'entretoise 19', ce qui permet de donner une inclinaison différente à la pale pour modifier sa trajectoire. De manière correspondante, la butée annulaire 26' montée sur la face interne de la branche inférieure de la chappe d'entretoise 22' comporte un pan incliné 26'a pour servir d'appui vertical à la pale, lorsque celle-ci est en position repliée. De même, la partie de la face interne de la branche inférieure de la chape 22' qui est du côté de la pale 4 peut être chanfreinée ou en biseau avec une inclinaison correspondant à celle de la pale pivotant autour de la broche outillage 18' inclinée.

D'une manière plus générale, l'introduction d'un jeu entre la broche outillage telle que 18' et l'alésage qui la reçoit dans la chape d'entretoise telle que 22' permet de donner à la broche outillage une liberté de rotation qui procure une inclinaison favorable à un repliage de la pale autour d'un axe de repliage incliné, pour éviter toute interférence avec d'autres éléments du rotor.

La figure 1 montre que le repliage des pales avant 3 et 4 est réalisé à l'aide d'un dispositif selon les figures 8 à 11. Les deux pales avant 3 et 4 sont donc repliées autour de broches outillage 18' inclinées de sorte que les pales 3 et 4 ont leur trajectoire qui passe en-dessous des pales arrière 2 et 5 et de leur composants associés sur le rotor tels que manchon 7 et amortisseurs de traînée 17.

Le dispositif des figures 8 à 11 peut encore être perfectionné, comme décrit ci-dessous en référence à la figure 15, pour les raisons présentées maintenant en référence aux figures 12 à 14.

Lorsque la pale 4 est en position repliée après pivotement autour de la broche outillage 18' inclinée dans l'alésage oblong 23'a, par rapport à l'entretoise 19' pivotée autour de la broche de pale 15 sur la chape 7b jusqu'à l'appui des butées de rotation 25' de l'entretoise 19' contre la face latérale externe 28 des branches de la chape 7b, la section du talon 29 du pied de pale 6 est inclinée par rapport aux sections frontales 30 des branches de la chape 7b, dont les faces supérieure et inférieure des branches sont par exemple supposées horizontales, comme représenté sur la figure 12. Cette figure 12 montre clairement l'inclinaison sur l'horizontale de la section du talon 29 du pied de pale, cette section 29 étant à un niveau supérieur à celui de la section 31 d'extrémité de la pale 4, du fait du pivotement vers le bas de cette dernière autour de la broche 18' inclinée.

Lors du dépliage de la pale 4, si aucune précaution n'est prise, il peut se faire que l'entretoise 19' pivote selon la flèche D autour de la broche de pale 15 et de son axe Z'-Z', sensiblement parallèle à l'axe du rotor Z-Z, de sorte que la section du talon 29 du pied de pale 6 continue à rester inclinée par rapport aux sections frontales 30 des branches de la chape 7b.

En conséquence, comme représenté sur la figure 13, on constate que l'engagement du talon 29 du pied de pale 6 entre les sections frontales 30 des deux branches de la chape 7b ne peut se faire, sauf si les opérateurs effectuant le dépliage manuel de la pale 4 imposent un couple C à la pale 4 autour de son axe longitudinal X-X, pour ramener l'axe de la broche outillage 18' parallèle à l'axe Z'-Z' de la broche de pale 15, c'est-à-dire pour redresser la broche outillage 18' dans l'alésage oblong 23'a. Sur la figure 13, on a représenté en trait plein la section inclinée du talon 29 de la pale, telle qu'elle se présente en raison d'une rotation de l'entretoise 19' par rapport à la chape 7b et autour de la broche de pale 15 dès la première phase du dépliage, et on a représenté en traits mixtes en 29' la section du talon de pale 29 telle qu'elle devrait être après application d'un couple C à exercer pour rendre la broche outillage 18' parallèle à la broche de pale 15. L'application de ce couple C par les opérateurs est particulièrement délicate en raison du poids de la pale 4 que les opérateurs supportent et des conditions dans lesquelles s'effectue le dépliage, notamment par grand vent et/ou sur un navire en mer.

Pour remédier à cet inconvénient, l'invention propose de maintenir l'entretoise 19' en contact par ses surfaces de butée 25' contre les faces d'appui latérales externes 28 des branches de la chape 7b, pendant le début du dépliage de la pale 4, c'est-à-dire pendant la rotation de la pale 4 autour de la broche outillage 18' et par rapport à l'entretoise 19'. En raison de l'orientation de l'axe x-x de la goupille de sécurité ou broche à billes 27 et de l'alésage transversal qui la reçoit dans la branche inférieure de la chape 22' de l'entretoise 19', c'est-à-dire en raison de l'orientation du grand axe de l'alésage oblong 23'a, et compte tenu de la position du centre de gravité Cg de la pale 4, cette rotation r (figure 12) imposée en déplaçant la pale 4 a pour effet de faire automatiquement basculer la pale 4 autour de son axe longitudinal X-X et donc de ramener la broche outillage 18' de la position inclinée à la position parallèle à la broche de pale 15, sous l'influence des couples exercés par la pale 4 vis-à-vis de la broche outillage 18' lorsqu'au cours du dépliage le centre de gravité Cg de la pale 4 passe d'un côté à l'autre de l'axe x-x de la goupille de sécurité ou broche à billes 27, comme représenté sur la figure 14. Grâce à ce basculement de la broche outillage 18' de la position inclinée à la position parallèle à la broche de pale 15, pendant le dépliage et pivotement de la pale 4 par rapport à l'entretoise 19' autour de cette broche outillage 18', alors que l'entretoise 19' est maintenue en butée latéralement contre la chape 7b, les faces supérieure et inférieure horizontales du pied de pale 6 sont bien présentées parallèles aux faces horizontales et internes des branches de la chape 7b entre lesquelles le pied de pale 6 est destiné à être engagé.

Cette première phase du repliage (pivotement de la pale 4 par rapport à l'entretoise 19' autour de la broche outillage 18' qui bascule de la position inclinée à la position parallèle à la broche de pale 15) se poursuit jusqu'à obtenir l'appui de la face du talon 29 de pied de pale 6, contre une surface de butée 32 en regard sur le tourillon 20 de l'entretoise 19', sur laquelle cette surface de butée 32 s'étend sur le côté de l'axe Z'-Z' de la broche de pale 15 qui est opposé à l'entretoise 22' et à la broche outillage 18', de sorte qu'en poursuivant la rotation de la pale 4 dans le sens de la rotation r de la figure 12, mais au-delà de la position de butée entre le talon de pale 29 et le tourillon 20 de l'entretoise 19' de la figure 14, c'est le talon de pale 29 qui fait tourner le tourillon 20 et donc toute l'entretoise 19' autour de la broche de pale 15, par rapport à la chape 7b. Cette rotation est poursuivie jusqu'à aligner celui des deux alésages 33 du pied de pale 6 qui n'est pas traversé par la broche outillage 18' avec les alésages 34 des deux branches de la chape 7b qui ne sont pas traversés par la broche de pale 15, et ensuite engager la seconde broche de pale 15, préalablement retirée lors du repliage de cette pale 4, pour à nouveau articuler directement à pivotement le pied de pale 6 par cette seconde broche de pale 15 entre les deux branches de la chape 7b.

Ensuite, la broche outillage 18' étant toujours parallèle à la première broche de pale 15, la broche outillage 18' peut être retirée ainsi que la première broche de pale 15, de sorte à désolidariser l'entretoise 19' d'une part du pied de pale 6 et d'autre part de la chape 7b, puis la pale 4 est pivotée en sens opposé autour de la seconde broche de pale 15 traversant les alésages 33 et 34 du pied de pale et de la chape 7b jusqu'à amener l'autre alésage 33 du pied de pale 6 en regard des deux autres alésages 34 de la chape 7b, pour remettre en place la première broche de pale 15 en fixant ainsi à nouveau le pied de pale 6 en configuration de vol par deux broches de pale 15 entre les deux branches de la chape 7b du manchon 7.

Pour le repliage, après la première rotation de la pale 4 par rapport à la chape 7b après retrait de la première broche de pale 15 et pivotement autour de la seconde broche de pale 15, pour la mise en place de l'entretoise 19', le mouvement opposé à celui précédement décrit et imposé à la pale 4 entraîne l'entretoise 19' en rotation jusqu'à amener ses faces de butées 25' contre les faces de butées latérales 28 de la chape 7b, et, en fin de procédure de repliage, après pivotement de la pale 4 par rapport à l'entretoise 19' en butée contre la chape 7b, la section du talon de pale 29 est inclinée par rapport à l'horizontale, comme représenté sur la figure 12, du fait qu'au cours de cette rotation le centre de gravité Cg de la pale 4 est à nouveau passé d'un côté à l'autre de l'axe x-x de la broche à billes 27, ce qui a produit un basculement de la pale 4 autour de son axe longitudinal X-X, ayant entraîné la broche outillage 18' de la position parallèle à la broche de pale 15 à la position inclinée dans l'alésage oblong 23'a.

Compte tenu du mode opératoire exposé ci-dessus en référence aux figures 12 à 14, il convient, en particulier pendant le dépliage d'une pale 4, dans une première phase de dépliage, de bloquer l'entretoise 19' en butée latérale contre la chape 7b, comme représenté sur la figure 12, jusqu'à ce que la broche outillage 18' soit ramenée de la position inclinée à la position parallèle à la broche de pale 15 (voir figure 14) après le pivotement de la pale 4 autour de cette broche outillage 18' et par rapport à l'entretoise 19', et de maintenir, dans une seconde phase de dépliage, les deux broches 15 et 18' parallèles en évitant tout retour intempestif de la broche outillage 18' vers la position inclinée, par exemple sous l'effet de rafales de vent ou de mouvements de la plateforme supportant l'hélicoptère, tout en débloquant l'entretoise 19' par rapport à la chape 7b, et en permettant la rotation de l'entretoise 19' autour de la broche de pale 15 par la poursuite de la rotation de la pale 4 dans le sens du dépliage autour d'une broche outillage 18' maintenue parallèle à la broche de pale 15, pour l'engagement du pied de pale 6 dans la chape 7b.

De même, au repliage, il convient de ne permettre l'inclinaison de la broche outillage 18' de la position parallèle à la broche de pale 15 vers la position inclinée qu'après que le pied de pale 6 a été complètement dégagé de la chape 7b, notamment par la rotation de l'entretoise 19' par rapport à la chape 7b et autour de la broche de pale 15 jusqu'à amener l'entretoise 19' en appui par ses butées 25' contre les faces latérales 28 des branches de la chape 7b.

A cet effet, l'invention propose le dispositif schématiquement représenté sur la figure 15, qui comporte une entretoise 19' telle que celle du dispositif des figures 8 à 11, et sur laquelle un doigt 35 rigide est monté pivotant autour d'un axe 36 porté par l'entretoise 19' et sensiblement parallèle à l'axe de son premier alésage 21, c'est-à-dire à la broche de pale 15 de pivot du tourillon 20 de l'entretoise 19' dans la chape 7b du manchon 7. Le doigt 35 est monté en rotation autour de l'axe 36 sur la branche supérieure de la chape 22' de l'entretoise 19', et peut pivoter sur cette dernière entre deux butées 37 et 38, en saillie sur cette branche supérieure de la chape 22', le doigt 35 étant rappelé par un ressort de traction 39 ancré entre le doigt 35 et l'entretoise 19', vers la butée 37, dans une première position limite, représentée en traits pleins sur la figure 15, dans laquelle le doigt 35 recouvre partiellement l'alésage oblong 23'a de l'entretoise 22'.

Dans cette première position ou position de repos du doigt 35, contre la butée 37, le doigt 35 ne libère le passage dans l'alésage oblong 23'a que pour une broche outillage 18' parallèle à la broche de pale 15, ce qui est favorable au montage de la chape d'entretoise 22' sur le pied de pale 6 et au démontage de cette chape 22' du pied de pale 6 à l'occasion respectivement du montage de l'entretoise 19' pour un repliage et du démontage de cette entretoise 19' après un dépliage de pale. De même, cette disposition est favorable au maintien de la broche outillage 18' en position parallèle à la broche de pale 15 pendant la première phase d'un repliage et pendant la seconde phase d'un dépliage, c'est-à-dire tant qu'une partie du pied de pale 6 reste engagée dans la chape 7b.

Pour permettre à la broche outillage 18' de s'incliner dans l'alésage oblong 23'a lorsque cette inclinaison est nécessaire, et, simultanément, pour maintenir l'entretoise 19' en appui par ses butées 25' contre les faces de butée latérales 28 de la chape 7b, le dispositif comprend également un élément d'attache 40 tel qu'une sangle ou un élément de liaison équivalent, qui est attaché d'une part à l'entretoise 19' en étant accroché en un point 41 du doigt 35, de l'autre côté de l'axe de rotation 36 par rapport au ressort de rappel 39, et, d'autre part, en un point fixe 42 du manchon 7, par exemple au niveau de l'attache de l'amortisseur de traînée 17 sur ce manchon 7 (voir figure 3).

Pendant la première phase du dépliage, la mise en place de la sangle 40 permet de maintenir en contact les faces de butée 25' et 28 pour bloquer l'entretoise 19' en position par rapport à la chape 7b, tout en faisant pivoter le doigt 36 de sa première à sa seconde position, représentée en traits interrompus sur la figure 15, et dans laquelle le doigt 35 est en appui contre la butée 38, dans une position de dégagement de l'alésage oblong 23'a. Comme, pendant cette phase du dépliage, la broche outillage 18' est inclinée, le doigt 35 est de fait dégagé de l'alésage oblong 23'a.

Lorsqu'on atteint la configuration de la figure 14 au cours du dépliage, la sangle amovible 40 est décrochée de ses points d'ancrage 41 et 42, et le doigt 35 revient de sa seconde position, contre la butée 38, à sa première position, contre la butée 37, en recouvrant partiellement l'alésage oblong 23'a et en maintenant ainsi la broche outillage 18' dans la position parallèle à la broche de pale 15 dans laquelle la broche 18' est revenue par le basculement de la pale 4 décrit ci-dessus en référence aux figures 12 à 14. Le dépliage est ensuite achevé de la manière décrite ci-dessus par la remise en place du pied de pale 6 dans la chape 7b et sa retenue par les deux broches de pale 15.

Au repliage, après le montage de l'entretoise 19' comme décrit ci-dessus et le pivotement de cette entretoise 19' autour de la broche de pale 15 dans la chape 7b jusqu'à la position de butée de la figure 15, la sangle 40 est mise en place et bloque l'entretoise 19' dans cette position en faisant pivoter le doigt 35 qui dégage l'alésage oblong 23'a. En faisant ensuite pivoter la pale 4 par rapport à l'entretoise 19' autour de la broche outillage 18', on fait basculer cette dernière de la position parallèle à la broche 15 à la position inclinée qui procure à la pale 4 la trajectoire descendante souhaitée.

Pour alléger l'entretoise 19' son tourillon 20 peut être aménagé en chape à deux branches parallèles, destinées à être reçues entre les branches de la chape 7b du manchon 7, laquelle chape 7b peut avoir deux ou trois branches selon que le pied de pale 6 est lui-même massif ou aménagé en chape à deux branches parallèles, comme dans US-A-4,712,978. Dans ce dernier cas, la chape d'entretoise 22' peut être une chape à deux ou trois branches parallèles entre lesquelles sont destinées à être reçues les branches de la chape du pied de pale 6.

Le dispositif pour le repliage d'une pale selon l'invention permet donc de procéder au repliage d'une pale sans problème d'interférence et sans modification, d'une pale à l'autre, des pièces constitutives de la tête de rotor, et en particulier des manchons 7 qui peuvent être identiques.

## Revendications

1. Dispositif pour le repliage manuel d'une pale (4) d'un rotor de giravion, en particulier d'un rotor principal d'hélicoptère, à au moins quatre pales dont chacune est solidaire en rotation d'un moyeu (9) du rotor par un organe de liaison (7), sensiblement radial par rapport à un axe du moyeu (9) qui est l'axe de rotation (Z-Z) du rotor, et dont l'extrémité radiale externe est conformée en chape (7b) dans laquelle la pale correspondante a son pied (6) retenu par deux broches de pale (15) traversant chacune des alésages alignés dans la chape (7b) et le pied de pale (6), les deux broches de pale (15) étant sensiblement parallèles entre elles, au moins une pale (4) étant repliable sur un côté du giravion et ayant ses deux broches de pale (15) amovibles de sorte que le retrait d'une broche (15) du pied de pale (6) et de la chape (7b) de l'organe de liaison (7) permet le pivotement de la pale (4) autour de l'autre broche de pale (15), le dispositif comprenant au moins une entretoise (19') amovible d'écartement du pied (6) de la pale repliable (4) par rapport à l'organe de liaison (7) correspondant, l'entretoise (19') comportant une première partie formant tourillon (20) et traversée d'un premier alésage (21), et une seconde partie formant chape (22') avec un second alésage (23'a-23'b), l'entretoise (19') étant, après retrait d'une première broche de pale (15) et pivotement de la pale (4) par rapport à l'organe de liaison (7) et autour de la seconde broche de pale (15), apte à être montée en rotation sur l'organe de liaison (7) par la retenue du tourillon d'entretoise (20) dans la chape (7b) de l'organe de liaison (7) à l'aide d'une broche engagée dans le premier alésage (21) de l'entretoise (19') et engageable dans l'alésage, préalablement traversé par la première broche de pale (15), dans la chape (7b) de l'organe de liaison (7), et l'entretoise (19') étant apte à retenir le pied de pale (6) en rotation dans la chape d'entretoise (22') par engagement d'une autre broche dans le second alésage (23'a-23'b) de l'entretoise (19') et dans l'alésage du pied de pale (6) préalablement traversé par la première broche de pale (15), de sorte qu'après le retrait de la seconde broche de pale (15), la pale (4) peut être repliée par pivotement de son pied (6) dans la chape d'entretoise (22') et pivotement de l'entretoise (19') par son tourillon (20) dans la chape (7b) de l'organe de liaison (7), caractérisé en ce que le second alésage (23'a-23'b) de l'entretoise (19') a sa partie ménagée dans au moins une branche de la chape d'entretoise (22') qui est un alésage oblong (23'a), permettant à ladite autre broche retenant le pied de pale (6) dans la chape d'entretoise (22') de s'incliner par rapport à ladite broche retenant le tourillon d'entretoise (20) dans la chape (7b) de l'organe de liaison (7) de sorte à modifier la trajectoire de la pale (4) dans son repliage par pivotement autour de ladite autre broche inclinée.

2. Dispositif selon la revendication 1, caractérisé en ce que ladite autre broche est une broche outillage (18') qui comporte une tige cylindrique apte à être reçue dans le second alésage (23'a-23'b) de l'entretoise (19') et engagée dans les au moins deux branches de la chape d'entretoise (22') de sorte à retenir le pied de pale (6) pivotant dans la chape d'entretoise (22'), le tourillon d'entretoise (20) et le premier alésage (21) de l'entretoise (19') ayant une géométrie adaptée à recevoir une broche de pale (15) pour retenir l'entretoise (19') pivotante dans la chape (7b) de l'organe de liaison (7).

3. Dispositif selon la revendication 2, caractérisé en ce qu'un alésage oblong (23'a) est ménagé dans la branche supérieure de la chape d'entretoise (22'), tandis que la branche inférieure de la chape d'entretoise (22') présente un évidement en portée sphérique (23'b), et la broche outillage (18') comporte une tige se terminant par un embout sphérique (18'a) qui, lors de la mise en place de la broche outillage (18') dans la chape d'entretoise (22'), est arrêté en translation par la portée sphérique (23'b).

4. Dispositif selon la revendication 3, caractérisé en ce que l'embout sphérique (18'a) de la broche outillage (18') est retenu dans la portée sphérique (23'b) de la branche inférieure de la chape d'entretoise (22') par un organe de retenue cylindrique (27), tel qu'une goupille ou broche à bille, logé dans un alésage diamétral traversant l'embout sphérique (18'a) et un alésage traversant ladite branche inférieure de chape d'entretoise (22'), de sorte que la broche outillage (18')peut pivoter autour de l'axe (x-x) dudit organe de retenue cylindrique (27) par rapport à l'entretoise (19').

5. Dispositif selon l'une quelconque des revendications 1 à 4, caractérisé en ce qu'il comprend également au moins un organe (35) mobile sur l'entretoise (19') entre une première position, dans laquelle l'organe mobile (35) recouvre au moins partiellement l'alésage oblong (23'a) de sorte à maintenir ladite autre broche (18') parallèle à ladite broche (15) retenant le tourillon (20) dans la chape (7b) de l'organe de liaison (7), et une seconde position dans laquelle ledit organe mobile (35) est dégagé dudit alésage oblong (23'a) de sorte à permettre l'inclinaison de ladite autre broche (18') par rapport à ladite broche (15) retenant le tourillon (20) dans la chape (7b) de l'organe de liaison (7).

6. Dispositif selon la revendication 5, caractérisé en ce que ledit organe mobile (35) est déplacé de sa première vers sa seconde position à l'encontre de moyens élastiques (39) de rappel sur l'entretoise (19') vers sa première position, pour permettre l'inclinaison de ladite autre broche (18').

7. Dispositif selon l'une des revendications 5 et 6, caractérisé en ce que ledit organe mobile est un doigt (35) monté pivotant sur l'entretoise (19') autour d'un axe (36) sensiblement parallèle audit premier alésage (21) et entre deux butées (37, 38) solidaires de l'entretoise (19') et arrêtant chacune ledit doigt (35) dans l'une respectivement desdites première et seconde positions, le doigt (35) étant conformé de sorte qu'en appui contre la butée (37) de la première position, ladite autre broche (18') peut être engagée dans le second alésage (23'a - 23'b) de l'entretoise (19') parallèlement audit premier alésae (21) pour le montage du pied de pale (6) dans la chape (22') de l'entretoise (19').

8. Dispositif selon l'une quelconque des revendications 1 à 7, caractérisé en ce que l'entretoise (19') comporte au moins une première butée (25') de rotation, limitant la rotation de l'entretoise (19') par rapport à l'organe de liaison (7), et au moins une deuxième butée (24') de rotation, limitant la rotation de la pale (4) par rapport à l'entretoise (19'), au repliage de ladite pale (4).

9. Dispositif selon l'une quelconque des revendications 1 à 8, caractérisé en ce qu'il comprend également au moins un organe d'attache amovible (40), destiné à être monté entre l'entretoise (19') et un point fixe (42) solidaire dudit organe de liaison (7), de sorte à empêcher la rotation de l'entretoise (19') par rapport à l'organe de liaison (7) à partir de la position de repliage de la pale (4) et vers la position de dépliage de la pale (4).

10. Dispositif selon la revendication 9, telle que rattachée à la revendication 8, caractérisé en ce que ledit organe d'attache (40), monté entre l'entretoise (19') et ledit point fixe (42), maintient l'entretoise (19') en appui par ladite première butée (25') de rotation contre ladite chape (7b) de l'organe de liaison (7), au moins au cours du dépliage de la pale (4), avant et pendant la rotation de la pale (4) par rapport à l'entretoise (19').

11. Dispositif selon la revendication 10 telle que rattachée à la revendication 7, caractérisé en ce que ledit organe d'attache (40) est monté sur l'entretoise (19') en étant lié (41) audit doigt pivotant (35) de sorte à faire pivoter ledit doigt (35) de sa première à sa seconde position sur l'entretoise (19') lorsque l'organe d'attache (40) est lié audit point fixe (42) solidaire de l'organe de liaison (7).

12. Dispositif selon l'une quelconque des revendications 9 à 11, caractérisé en ce que l'entretoise (19') présente au moins une butée (32) d'entraînement en rotation de l'entretoise (19') par l'appui d'au moins une butée du talon (29) du pied de pale (6) pendant le dépliage de la pale (4), après la rotation de la pale (6) par rapport à l'entretoise (19').

13. Dispositif selon l'une quelconque des revendications 1 à 12, caractérisé en ce que la chape d'entretoise (22') a une branche inférieure qui porte sur sa face interne une butée (26') d'appui vertical de la pale (4).

14. Dispositif selon la revendication 13, caractérisé en ce que la butée d'appui (26') est annulaire, de préférence en matière plastique, et apte à être traversée par la broche (18') de retenue du pied de pale (6) dans la chape d'entretoise (22').

15. Dispositif selon l'une des revendications 13 et 14, caractérisé en ce que ladite butée d'appui (26') comporte un pan incliné (26'a) servant d'appui vertical à la pale (4) en position repliée.

16. Dispositif selon l'une quelconque des revendications 1 à 15, caractérisé en ce que l'entretoise (19') est monobloc et coudée sensiblement en équerre ou cintrée sensiblement en croissant dans un plan sensiblement perpendiculaire à l'axe du premier alésage (21) de l'entretoise (19').

17. Dispositif selon l'une quelconque des revendications 2 à 16, caractérisé en ce que ladite broche de pale (15) amovible retenant le tourillon d'entretoise (20) dans la chape (7b) de l'organe de liaison (7), peut être ladite première broche de pale (15) ou une broche de pale (15) retirée d'une autre pale (2, 5) du rotor qui se replie par pivotement autour de sa seconde broche de pale (15) sans mise en place d'une entretoise amovible d'écartement (19').

## Patentansprüche

1. Vorrichtung zum manuellen Einklappen eines Blattes (4) eines Drehflügler-Rotors, insbesondere eines Hubschrauberhauptrotors, mit wenigstens vier Blättern, von denen jedes mit einer Nabe (9) des Rotors über ein Verbindungsorgan (7) drehvereint ist, das bezüglich auf eine Achse der Nabe (9), welche die Drehachse (Z-Z) des Rotors ist, im wesentlichen radial ist und dessen äußeres radiales Ende als Gabelkopf (7b) ausgebildet ist, in dem das entsprechende Blatt an seinem Fuß (6) durch zwei Blattstifte (15) gehalten wird, die jeweils fluchtende Bohrungen im Gabelkopf (7b) und Blattfuß (6) durchlaufen, wobei die beiden Blattstifte (15) zueinander im wesentlichen parallel sind, wobei zumindest ein Blatt (4) auf einer Seite des Drehflüglers einklappbar ist und seine beiden Blattstifte (15) lösbar sind, so daß das Herausziehen eines Stiftes (15) aus dem Blattfuß (6) und aus dem Gabelkopf (7b) des Verbindungsorgans (7) die Schwenkung des Blattes (4) um den anderen Blattstift (15) ermöglicht, wobei die Vorrichtung wenigstens ein lösbares Abstandsstück (19') des Fußes (6) des einklappbaren Blattes (4) in bezug auf das entsprechende Verbindungsorgan (7) enthält, wobei das Abstandsstück (19') einen ersten Teil, der einen Zapfen (20) bildet und von einer ersten Bohrung (21) durchlaufen ist, und einen zweiten Teil enthält, der einen Gabelkopf (22') mit einer zweiten Bohrung (23'a-23'b) bildet, wobei das Abstandsstück (19') nach Herausziehen eines ersten Blattstiftes (15) und Schwenkung des Blattes (4) in bezug auf das Verbindungsorgan (7) und um den zweiten Blattstift (15) befähigt ist, am Verbindungsorgan (7) durch die Halterung des Abstandsstückzapfens (20) im Gabelkopf (7b) des Verbindungsorgans (7) mit Hilfe eines Stiftes drehbar angebracht zu werden, der in der ersten Bohrung (21) des Abstandsstückes (19') eingesetzt wird und in der zuvor vom ersten Blattstift (15) durchlaufenen Bohrung im Gabelkopf (7b) des Verbindungsorgans (7) einsetzbar ist, und wobei das Abstandsstück (19') befähigt ist, den Blattfuß (6) im Abstandsstück-Gabelkopf (22') durch Einsetzen eines weiteren Stiftes in die zweite Bohrung (23'a-23'b) des Abstandsstückes (19') und in die Bohrung des Blattfußes (6) drehbar zu halten, die zuvor vom ersten Blattstift (15) durchlaufen war, so daß nach Herausziehen des zweiten Blattstiftes (15) das Blatt (4) durch Schwenkung seines Fußes (6) im Abstandsstück-Gabelkopf (22') und Schwenkung des Abstandsstückes (19') mittels seines Zapfens (20) im Gabelkopf (7b) des Verbindungsorgans (7) geklappt werden kann, **dadurch gekennzeichnet**, daß die zweite Bohrung (23'a-23'b) des Abstandsstückes (19') einen in wenigstens einen Zweig des Abstandsstück-Gabelkopfes (22') vorgesehenen Teil hat, der eine längliche Bohrung (23'a) ist, die es dem genannten weiteren Stift, der den Blattfuß (6) im Abstandsstück-Gabelkopf (22') hält, ermöglicht, sich in bezug auf den genannten Stift, der den Abstandsstückzapfen (20) im Gabelkopf (7b) des Verbindungsorgans (7) hält, zu neigen, um die Bahn des Blattes (4) bei seinem Klappen durch Schwenkung um den geneigten weiteren Stift zu ändern.

2. Vorrichtung nach Anspruch 1, **dadurch gekennzeichnet**, daß der genannte weitere Stift ein Werkzeugstift (18') ist, der einen zylindrischen Schaft enthält, der geeignet ist, in der zweiten Bohrung (23'a-23'b) des Abstandsstückes (19') aufgenommen und in den wenigstens zwei Zweigen des Abstandsstück-Gabelkopfes (22') eingesetzt zu werden, um den im Abstandsstück-Gabelkopf (22') schwenkbaren Blattfuß (6) zu halten, wobei der Abstandsstückzapfen (20) und die erste Bohrung (21) des Abstandsstückes (19') eine Geometrie haben, die zur Aufnahme eines Blattstiftes (15) ausgelegt ist, um das schwenkbare Abstandsstück (19') im Gabelkopf (7b) des Verbindungsorgan (7) zu halten.

3. Vorrichtung nach Anspruch 2, **dadurch gekennzeichnet**, daß eine längliche Bohrung (23'a) im oberen Zweig des Abstandsstück-Gabelkopfes (22') vorgesehen ist, wogegen der untere Zweig des Abstandsstück-Gabelkopfes (22') eine Vertiefung mit kugelförmigem Sitz (23'b) aufweist, und der Werkzeugstift (18') einen Schaft enthält, der mit einem kugelförmigen Ansatz (18'a) ausläuft, der bei Einsetzen des Werkzeugstiftes (18') in den Abstandsstück-Gabelkopf (22') durch den kugelförmigen Sitz (23'b) hinsichtlich einer Längsbewegung gestoppt wird.

4. Vorrichtung nach Anspruch 3, **dadurch gekennzeichnet**, daß der kugelförmige Ansatz (18'a) des Werkzeugstiftes (18') im kugelförmigen Sitz (23'b) des unteren Zweiges des Abstandsstück-Gabelkopfes (22') durch ein zylindrisches Halteorgan (27) gehalten ist, wie z.B. einen Bolzen oder einen Kugelstift, das in einer den kugelförmigen Ansatz (18'a) diametral durchlaufenden Bohrung und einer den unteren Zweig des Abstandsstück-Gabelkopfes (22') durchlaufenden Bohrung untergebracht ist, so daß der Werkzeugstift (18') um die Achse (x-x) des genannten zylindrischen Halteorgans (27) in bezug auf das Abstandsstück (19') schwenken kann.

5. Vorrichtung nach einem der Ansprüche 1 bis 4, **dadurch gekennzeichnet**, daß sie auch wenigstens ein bewegliches Organ (35) umfaßt, das am Abstandsstück (19') zwischen einer ersten Position, in der das bewegliche Organ (35) zumindest teilweise die längliche Bohrung (23'a) abdeckt, um den genannten weiteren Stift (18') parallel zu dem den Zapfen (20) im Gabelkopf (7b) des Verbindungsorgans (7) haltenden Stift (15) zu halten, und einer zweiten Position bewegbar ist, in der das bewegliche Organ (35) von der länglichen Bohrung (23'a) freigesetzt ist, um die Neigung des genannten weiteren Stiftes (18') in bezug auf den den Zapfen (20) im Gabelkopf (7b) des Verbindungsorgans (7) haltenden Stift (15) zu ermöglichen.

6. Vorrichtung nach Anspruch 5, **dadurch gekennzeichnet**, daß das genannte bewegliche Organ (35) von seiner ersten Position zur zweiten Position hin entgegen elastischen Mitteln (39) zum Rückstellen am Abstandsstück (19') zu dessen erster Position hin verschieblich ist, um die Neigung des genannten weiteren Stiftes (18') zu ermöglichen.

7. Vorrichtung nach einem der Ansprüche 5 und 6, **dadurch gekennzeichnet**, daß das genannte bewegliche Organ ein Finger (35) ist, der am Abstandsstück (19') um eine zur ersten Bohrung (21) im wesentlichen parallel verlaufende Achse (36) schwenkbar und zwischen zwei Anschlagen (37, 38) angebracht ist, die mit dem Abstandsstück (19') vereint sind und jeweils den genannten Finger (35) in der ersten bzw. in der zweiten Position stoppen, wobei der Finger (35) so ausgebildet ist, daß bei Abstützung gegen den Anschlag (37) der ersten Position der genannte weitere Stift (18') in die zweite Bohrung (23'a-23'b) des Abstandsstückes (19') parallel zur ersten Bohrung (21) für die Anbringung des Blattfußes (6) im Gabelkopf (22') des Abstandsstückes (19') eingesetzt werden kann.

8. Vorrichtung nach einem der Ansprüche 1 bis 7, **dadurch gekennzeichnet**, daß das Abstandsstück (19') wenigstens einen ersten Drehanschlag (25'), der die Drehung des Abstandsstückes (19') in bezug auf das Verbindungsorgan (7) begrenzt, und wenigstens einen zweiten Drehanschlag (24') umfaßt, der die Drehung des Blattes (4) in bezug auf das Abstandsstück (19') bei Einklappen des genannten Blattes (4) begrenzt.

9. Vorrichtung nach einem der Ansprüche 1 bis 8, **dadurch gekennzeichnet**, daß sie auch wenigstens ein lösbares Befestigungsorgan (40) umfaßt, das zwischen dem Abstandsstück (19') und einem mit dem genannten Verbindungsorgan (7) vereinten Festpunkt (42) angebracht werden soll, um die Drehung des Abstandsstückes (19') in bezug auf das Verbindungsorgan (7), ausgehend von der Einklapp-Position des Blattes (4) und zur Ausklapp-Position des Blattes (4) hin, zu verhindern.

10. Vorrichtung nach Anspruch 9 in Verknüpfung mit Anspruch 8, **dadurch gekennzeichnet**, daß das genannte Befestigungsorgan (40), das zwischen dem Abstandsstück (19') und dem genannten Festpunkt (42) angebracht ist, das Abstandsstück (19') unter Abstützung durch den genannten ersten Drehanschlag (25') am Gabelkopf (7b) des Verbindungsorgans (7) zumindest im Verlauf des Ausklappens des Blattes (4) vor und während der Drehung des Blattes (4) in bezug auf das Abstandsstück (19') hält.

11. Vorrichtung nach Anspruch 10 in Verknüpfung mit Anspruch 7, **dadurch gekennzeichnet,** daß das genannte Befestigungsorgan (40) am Abstandsstück (19') angebracht ist, wobei es mit dem schwenkbaren Finger (35) verbunden (41) ist, um den genannten Finger (35) von seiner ersten in seine zweite Position am Abstandsstück (19') schwenken zu lassen, wenn das Befestigungsorgan (40) mit dem genannten Festpunkt (42) verbunden ist, der mit dem Verbindungsorgan (7) vereint ist.

12. Vorrichtung nach einem der Ansprüche 9 bis 11, **dadurch gekennzeichnet**, daß das Abstandsstück (19') wenigstens einen Anschlag (32) des Drehantriebs des Abstandsstückes (19') durch Abstützung wenigstens eines Anschlags des Endes (29) des Blattfußes (6) während des Ausklappens des Blattes (4) nach der Drehung des Blattes (4) in bezug auf das Abstandsstück (19') aufweist.

13. Vorrichtung nach einem der Ansprüche 1 bis 12, **dadurch gekennzeichnet**, daß der Abstandsstück-Gabelkopf (22') einen unteren Zweig hat, der auf seiner Innenfläche einen Anschlag (26') zur vertikalen Abstützung des Blattes (4) trägt.

14. Vorrichtung nach Anspruch 13, **dadurch gekennzeichnet**, daß der Abstützungsanschlag (26') ringförmig, vorzugsweise aus Kunstoffmaterial und befähigt ist, vom Stift (18') zum Halten des Blattfußes (6) im Abstandsstück-Gabelkopf (22') durchlaufen zu werden.

15. Vorrichtung nach einem der Ansprüche 13 und 14, **dadurch gekennzeichnet**, daß der genannte Abstützungsanschlag (26') eine geneigte Bahn (26'a) umfaßt, die dem Blatt (4) in ausgeklappter Position zur Vertikalabstützung dient.

16. Vorrichtung nach einem der Ansprüche 1 bis 15, **dadurch gekennzeichnet**, daß das Abstandsstück (19') aus einem Stück ist und in einer zur Achse der ersten Bohrung (21) des Abstandsstückes (19') im wesentlichen senkrechten Ebene im wesentlichen rechtwinklig abgewinkelt oder im wesentlichen mondsichelförmig gebogen ist.

17. Vorrichtung nach einem der Ansprüche 2 bis 16, **dadurch gekennzeichnet**, daß der genannte lösbare Blattstift (15), der den Abstandsstückzapfen (20) im Gabelkopf (7b) des Verbindungsorgans (7) hält, der genannte erste Blattstift (15) oder ein Blattstift (15) sein kann, der aus einem anderen Blatt (2, 5) des Rotors herausgezogen ist, das durch Schwenkung um seinen zweiten Blattstift (15) ohne Einsatz eines lösbaren Abstandsstückes (19') klappbar ist.

## Claims

1. Device for the manual folding of a blade (4) of a rotor of a rotary wing aircraft, in particular of a helicopter main rotor having at least four blades each of which is integral in rotation with a hub (9) of the rotor by means of a connecting member (7) which is substantially radial with respect to an axis of the hub (9) which is the axis of rotation (Z-Z) of the rotor, and whose outer radial end is conformed as a yoke (7b) in which the corresponding blade has its root (6) retained by two blade pins (15) each traversing aligned bores in the yoke (7b) and the blade root (6), the two blade pins (15) being substantially parallel with each other, at least one blade (4) being foldable along one side of the rotary wing aircraft and having two removable blade pins (15) such that the withdrawal of a pin (15) from the blade root (6) and from the yoke (7b) of the connecting member (7) makes it possible to pivot the blade (4) about the other blade pin (15), the device comprising at least one detachable distance-piece (19') for separating the root (6) of the foldable blade (4) with respect to the corresponding connecting member (7), the distance-piece (19') comprising a first part forming a pivot (20) and traversed by a first bore (21) and a second part forming a yoke (22) with a second bore (23'a-23'b), the distance-piece (19') being, after the withdrawal of a first blade pin (15) and the pivoting of the blade (4) with respect to the connecting member (7) and about the second blade pin (15), capable of being mounted in rotation on the connecting member (7) by the retention of the distance piece pivot (20) in the yoke (7b) of the connecting member (7) by means of a pin engaged in the first bore (21) of the distance-piece (19') and engageable in the bore, previously traversed by the first blade pin (15), in the yoke (7b) of the connecting member (7), and the distance-piece (19') being capable of retaining the blade root (6) in rotation in the distance-piece yoke (22') by the engagement of another pin in the second bore (23'a-23'b) of the distance-piece (19') and in the bore of the blade root (6) previously traversed by the first blade pin (15) such that after the withdrawal of the second blade pin (15), the blade (4) can be folded by pivoting its root (6) in the distance-piece yoke (22') and pivoting of the distance-piece (19') by its pivot (20) in the yoke (7b) of the connecting member (7), characterised in that the second bore (23'a-23'b) of the distance-piece (19') has its part formed in at least one branch of the distance-piece yoke (22') which is an oblong bore (23'a) allowing the said other pin retaining the blade root (6) in the distance-piece yoke (22') to be inclined with respect to the said pin retaining the distance-piece pivot (20) in the yoke (7b) of the connecting member (7) in such a way as to modify the trajectory of the blade (4) in its folding by pivoting about the said other inclined pin.

2. Device according to Claim 1, characterised in that the said other pin is a fitting pin (18') which comprises a cylindrical shaft capable of being received in the second bore (23'a-23'b) of the distance-piece (19') and engaged in the at least two branches of the distance-piece yoke (22') in such a way as to retain the blade root (6) pivoting in the distance-piece yoke (22'), the distance-piece pivot (20) and the first bore (21) of the distance-piece (19') having a geometry adapted to receive a blade pin (15) for retaining the distance-piece (19') pivoting in the yoke (7b) of the connecting member (7).

3. Device according to Claim 2, characterised in that an oblong bore (23'a) is formed in the upper branch of the distance-piece yoke (22'), whilst the lower branch of the distance-piece yoke (22') has a spherical bearing recess (23'b), and the fitting pin (18') comprises a shaft terminating in a spherical end-piece (18'a) which, when putting the fitting pin (18') into place in the distance-piece yoke (22'), is stopped in translation by the spherical bearing (23'b).

4. Device according to Claim 3, characterised in that the spherical end-piece (18'a) of the fitting pin (18') is retained in the spherical bearing (23'b) of the lower branch of the distance-piece yoke (22') by a cylindrical retaining member (27), such as a pin or ball pin, housed in a diametrical bore traversing the spherical end-piece (18'a) and a bore traversing the said lower branch of the distance-piece yoke (22'), such that the fitting pin (18') can pivot about the axis (x-x) of the said cylindrical member (27) with respect to the distance piece (19').

5. Device according to any one of Claims 1 to 4, characterised in that its also comprises at least one member (35) which is mobile on the distance-piece (19') between a first position, in which the mobile member (35) at least partially covers the oblong bore (23'a) in such a way as to maintain the other pin (18') parallel with the said pin (15) retaining the pivot (20) in the yoke (7b) of the connecting member (7), and a second position in which the said mobile member (35) is clear of the said oblong bore (23'a) in such a way as to allow the inclination of the said other pin (18') with respect to the said pin (15) retaining the pivot (20) in the yoke (7b) of the connecting member (7).

6. Device according to Claim 5, characterised in that the said mobile member (35) is displaced from its first position towards its second position against the action of elastic means (39), on the distance-piece (19'), of return towards its first position, in order to allow the inclination of the said other pin (18').

7. Device according to one of Claims 5 and 6, characterised in that the said mobile member is a finger (35) mounted such that it pivots on the distance-piece (19') about a spindle (36) substantially parallel with the said first bore (21) and between two stops (37, 38) integral with the distance-piece (19') and each respectively stopping the said finger (35) in one of the said first and second positions, the finger (35) being conformed such that on bearing against the stop (37) of the first position, the said other pin (18') can be engaged in the second bore (23'a - 23'b) of the distance-piece (19') parallel with the said first bore (21) for the fitting of the blade root (6) in the yoke (22') of the distance-piece (19').

8. Device according to any one of Claims 1 to 7, characterised in that the distance-piece (19') comprises at least a first rotational stop (25'), limiting the rotation of the distance-piece (19') with respect to the connecting member (7) and at least a second rotational stop (24), limiting the rotation of the blade (4) with respect to the distance-piece (19'), when folding the said blade (4).

9. Device according to any one of Claims 1 to 8, characterised in that it furthermore comprises at least one detachable attachment member (40), intended to be fitted between the distance-piece (19') and a fixed point (42) integral with the said connecting member (7), in such a way as to prevent the rotation of the distance-piece (19') with respect to the connecting member (7) starting from the folded position of the blade (4) and towards the unfolded position of the blade (4).

10. Device according to Claim 9, as linked with Claim 8, characterised in that the said attachment member (40), fitted between the distance-piece (19') and the said fixed point (42), maintains the distance-piece (19') bearing by means of the said first rotational stop (25') against the said yoke (7b) of the connecting member (7), at least during the unfolding of the blade (4), before and during the rotation of the blade (4) with respect to the distance-piece (19').

11. Device according to Claim 10, as linked with Claim 7, characterised in that the said attachment member (40) is fitted on the distance-piece (19') whilst being bound (41) with the said pivoting finger (35) in such a way as to cause the pivoting of the said finger (35) from its first position to its second position on the distance-piece (19') when the attachment member (40) is bound to the said fixed point (42) integral with the connecting member (7).

12. Device according to any one of Claims 9 to 11, characterised in that the distance-piece (19') has at least one stop (32) of the rotational drive of the distance-piece (19') by the bearing of at least one stop of the heel (29) of the blade root (6) during the unfolding of the blade (4), after rotation of the blade (6) with respect to the distance-piece (19').

13. Device according to any one of Claims 1 to 12, characterised in that the distance-piece yoke (22') has a lower branch which carries on its inside face a vertical bearing stop (26') for the blade (4).

14. Device according to Claim 13, characterised in that the stop bearing (26') is annular, preferably made of plastic material and capable of being traversed by the pin (18') for retaining the blade root (6) in the distance-piece yoke (22').

15. Device according to one of Claims 13 and 14, characterised in that the said stop bearing (26') comprises an inclined flat (26'a) serving as a vertical support for the blade (4) in the folded position.

16. Device according to any one of Claims 1 to 15, characterised in that the distance-piece is in one piece and bent, substantially at right angles or bent substantially in a crescent shape in a plane substantially perpendicular to the axis of the first bore (21) of the distance-piece (19').

17. Device according to any one of Claims 2 to 16, characterised in that the said removable blade pin (15) retaining the distance-piece pivot (20) in the yoke (7b) of the connecting member (7) can be the said first blade pin (15) or a blade pin (15) withdrawn from another blade (2, 5) of the rotor which is folded by pivoting about its second blade pin (15) without the positioning of a detachable separating distance-piece (19').
